# EUROPEAN PATENT SPECIFICATION

(11) **EP 1 319 294 B1**
(45) Date of publication and mention of the grant of the patent: **14.10.2009**
(21) Application number: 01968230.1
(22) Date of filing: 29.08.2001
(51) Int. Cl.: H04L 29/06, H04L 12/56, H04L 12/58

(54) **SYSTEM AND METHOD FOR PUSHING INFORMATION FROM A HOST SYSTEM TO A MOBIEL DATA COMMUNICATION DEVICE IN A WIRELESS DATA NETWORK**
SYSTEM UND VERFAHREN ZUM SCHIEBEN VON INFORMATION VON EINEM WIRTRECHNERSYSTEM ZU EINEM MOBILEN DATENKOMMUNIKATIONSGERÄT IN EINEM DRAHTLOSEN DATENNETZ
SYSTEME ET PROCEDE DE TRANSMISSION AUTOMATIQUE D'INFORMATIONS D'UN SYSTEME HOTE VERS UN DISPOSITIF MOBILE DE COMMUNICATION DE DONNEES DANS UN RESEAU DE DONNEES SANS FIL

(30) Priority: 19.09.2000 US 233501 P; 03.10.2000 US 237616 P; 14.02.2001 US 268824 P
(43) Date of publication of application: 18.06.2003
(73) Proprietor: Research In Motion Limited, Waterloo, Ontario N2L 3W8 (CA); Hind, Hugh R., Waterloo, Ontario N2K 3Z2 (CA); Knowles, Michael, Waterloo, Ontario N2T 2S9 (CA); Naqvi, Noushad, Waterloo, ON N2K 4C1 (CA); Bajar, David, Kitchener, Ontario N2N 3H4 (CA); Burns, Tony, Burlington, Ontario l/M 1R1 (CA); Patterson, Ian, Patersburg, ON N0B 2H0 (CA); Lewis, Allan, Kitchener, ON N2A 3G6 (CA); Mousseau, Gary, Waterloo, ON N2L 6M5 (CA); Lazaridis, Mihal, Waterloo, ON N2T 2K1 (CA)
(72) Inventor: HIND, Hugh, R., Waterloo, Ontario N2K 3Z2 (CA); KNOWLES, Michael, Waterloo, Ontario N2T 2S9 (CA); NAQVI, Noushad, Waterloo, Ontario N2K 4C1 (CA); BAJAR, David, Kitchener, Ontario N2N 3H4 (CA); BURNS, Tony, Burlington, Ontario L7M 1R1 (CA); PATTERSON, Ian, Patersburg, Ontario N0B 2H0 (CA); LEWIS, Allan, New Dundee, Ontario NOB 2EO (CA); MOUSSEAU, Gary, Waterloo, Ontario N2L 6M5 (CA); LAZARIDIS, Mihal, Waterloo, Ontario N2T 2K1 (CA)
(74) Representative: Moore, Barry
(86) International application number: PCT/US2001/026907
(87) International publication number: WO 2002/025890

## Description

### CROSS-REFERENCE TO RELATED APPLICATIONS

This application claims priority from United States Provisional Applications S/N 60/268,824, filed on February 14, 2001, S/N 60/237,616, filed on October 3, 2000, and S/N 60/233,501, filed on September 19, 2000. This application also claims priority from, and is a continuation-in-part of, United States Patent Application S/N 09/528,495, filed on March 17, 2000 which is a continuation of S/N 09/087,623, filed on May 29, 1998, now United States Patent No. 6,219,694.

### BACKGROUND

### 1. Field of the Invention

The present invention is directed to the field of data communications in a wireless network. More specifically, the invention relates to a system and method for communicating information to a mobile communication device ("mobile device") within a wireless data network (such as an IP based wireless data network) and also for replicating information between a host system (or a host system with an associated messaging server) and the mobile device via the wireless data network.

### 2. Description of the Related Art

Wireless data networks are known in this field. Early wireless data networks include the Mobitex network and the Datatac network. These early networks provided limited data capacity and also required to have fixed addresses for each mobile device. Such a fixed address is also known as a "static" network address. Recently, however, new types of wireless data networks have emerged having much greater data bandwidth. These new data networks, such as the GPRS network, may utilize the Internet Protocol (IP) for routing data to a mobile device. The inherent addressing limitations of the IP protocol (and other similar packet protocols) typically limit the use of have static addressing in these types of data networks, thus leading to a dynamic addressing scheme. In this type of addressing scheme, a pool of available network addresses is dynamically assigned to a much greater pool of user devices depending on which devices are accessing the network at a given instant.

As described in more detail in the co-pending, and co-owned applicationS/N, a wireless data network can be coupled to one or more redirector applications for enabling real-time mirroring (or redirection) of user data items from a user's office computer (or corporate server) to the user's mobile device. In such a redirector application, user data items, such ase-mail messages, calendar events, etc., are received at the user's office computer, which then redirects (or mirrors) the data items to the user's mobile device via the wireless data network. It would be advantageous to extend this redirection system to operate with newer wireless data networks such as the General Packet Radio Service ("GPRS") network, or other networks that may utilize a packet protocol, such as IP, in which the wireless data network dynamically assigns network addresses on an as-needed basis.

WO 97/32251 discloses a communication system operating to transfer data from a provider computer to a consumer computer through a communications network. If the consumer computer or a distribution server receives updated communications objects for a local area network (LAN), a program can automatically distribute updates to other consumers on the LAN.

WO 00/44149 discloses a method for automatically locating and connecting a mobile wireless communication device to a packet-switched network. When the home agent of the mobile device receives an internet protocols (IP) packet for the mobile device and an authentification server can not determine the IMSI/ESN number for the device, the device is paged via the wireless communications network. In response to the page, the mobile device dials into the wireless communications network and initiates a connection to the packet-switched network whereby the IP packet is transmitted to the device.

According to a first aspect, the invention provides a method as claimed in claim 1 with advantages features provided in accordance with dependent claims 2-27. According to another aspect, the invention provides a system as claimed in claim 28 with advantageous features provided in accordance with the dependent claims.

### SUMMARY

A system and method for redirecting data to one or more mobile data communication devices via a wireless packet data network is provided in which the network dynamically assigns network addresses to the mobile data communication devices on an as-needed basis. A redirector program preferably operating at a host system continuously redirects data to the wireless packet data network, as the data is received (or altered) at the host system.

The wireless network transmits a connection request command to the mobile device via a parallel voice network, or via a control channel on the data network, or via some other type of low-bandwidth data channel. The mobile device then contacts the wireless data network and requests a network address so that the store-and-forward server can send the data to the mobile device. In this embodiment the presence of a 'push bearer' channel is preferred. A push bearer network is defined as a network that can provide an address for the wireless device that is statically defined and always reachable. The push bearer network can have low capacity and very limited bandwidth, as is the case with the Short Message Service (SMS) messaging, used on many wireless networks.

The redirector program enables a user to redirect (or mirror) certain user selected data items (or parts of data items) from the host system to the user's mobile data communication device upon detecting that one or more user-defined triggering events has occurred. Also operating at the host system are various subsystems that can be configured to create triggering events, such as a screen saver sub-system or a keyboard sub-system, as well as sub-systems for repackaging the user's data items for transparent delivery to the mobile device, such as a TCP/IP sub-system or one or more E-Mail sub-systems. Other subsystems for creating triggering events and repackaging the user's data items could also be present at the host system.

Using the redirector program, the user can select certain data items for redirection, such as E-mail messages, calendar events, meeting notifications, address entries, journal entries, personal reminders, etc. Having selected the data items for redirection, the user can then configure one or more event triggers, which are sensed by the redirector program to initiate redirection of the user's data items. These user-defined triggers (or event triggers) may include external events, internal events and networked events. Examples of external events include: receiving a message from the user's mobile data communication device to begin redirection; receiving a similar message from some external computer; sensing that the user is no longer in the vicinity of the host system; or any other event that is external to the host system. Internal events could be a calendar alarm, screen saver activation, keyboard timeout, programmable timer, or any other user-defined event that is internal to the host system. Networked events are user-defined messages that are transmitted to the host system from another computer coupled to the host system via a network to initiate redirection.

In addition to the functionality noted above, the redirector program provides a set of software-implemented control functions for determining the type of mobile data communication device and its address (if a static address is used), for programming a preferred list of message types that are to be redirected, and for determining whether the mobile device can receive and process certain types of message attachments, such as word processor or voice attachments.

The determination of whether a particular mobile device can receive and process attachments is initially configured by the user of that mobile device at the host system. This configuration can be altered on a global or per message basis by transmitting a command message from the mobile device to the host system. If the redirector is configured so that the mobile device cannot receive and process word processor or voice attachments, then the redirector program routes these attachments to an external machine that is compatible with the particular attachment, such as an attached printer or networked fax machine or telephone. Other types of attachments could be redirected to other types of external machines in a similar fashion, depending upon the capabilities of the mobile device. For example, if a user is traveling and receives a message with an attachment that the user's mobile device can process or display, the user may, from a mobile communications device, send a command message to the host system indicating that that attachment should be sent to a fax machine at a hotel
where the user will be spending the evening. This enables the user to receive important E-mail attachments as long as the host system is provided with sufficient information about the destination where the attachment is to be forwarded.

Once an event has triggered redirection of the user data items, the host system repackages these items in a manner that is transparent to the mobile data communication device, so that the data at the mobile device appears similar to the same data at the user's host system. The preferred repackaging method includes wrapping the user data items in an E-mail envelope that corresponds to the address of the mobile data communication device, although, alternatively, other repackaging methods could be used with the present invention, such as special-purpose TCP/IP wrapping techniques, or other methods of wrapping the user selected data items. The repackaging method preferably results in a shared E-mail address for the user's host system and the user's mobile device. To a recipient of an E-mail generated at either the host or the mobile device, it appears as though the E-mail was generated at the host system. The repackaging method also provides encryption/decryption and compression/decompression.

In an alternative system and method, the redirector program executes at a network server, and the server is programmed to detect numerous redirection event triggers over a local area network ("LAN") from multiple user desktop systems coupled to the server via the LAN. The server can receive internal event triggers from each of the user desktops via the LAN, and can also receive external event triggers, such as messages from the users' mobile data communication devices. In response to receiving one of these triggers, the server redirects the user's data items to the proper mobile data communication device. The user data items and addressing information for a particular mobile device can be stored at the server or at the user's desktop system. Using this alternative configuration, one redirector program can serve a plurality of users. This alternative configuration could also include an Internet or Intranet-based redirector program that could be accessible through a secure webpage or other user interface.

In another alternative configuration of the present invention, a redirector program operates at both the host system and at the user's mobile data communication device. In this configuration, the user's mobile device operates similarly to the host system, described below, and is configured in a similar fashion to redirect certain user-selected data items from the mobile device to the user's host system (or some other computer) upon detecting an event trigger at the mobile device. This configuration provides two-way redirection of information from the host to the mobile device and from the mobile device to the host.

The present invention can be used with many types of mobile data communication devices, including two-way pagers, cellular telephones having data messaging capabilities, PDAs, laptops, palmtops, or any other type of wireless communicator. These wireless communicators may be dual-mode devices that operate on both voice and data networks, such as a communicator capable of sending and receiving voice signals over a voice network like GSM, and also capable of sending and receiving data signals over a data network like GPRS. Or, the wireless communicator may be a single-mode device that operates on just a data network (like GPRS), or it may be a multimode device capable of operating on some other combination of voice and data networks.

### BRIEF DESCRIPTION OF THE DRAWINGS

FIG. 1 is a system diagram showing the redirection of user data items from a user's desktop PC (host system) to the user's mobile data communication device, where the redirector software is operating at the user's desktop PC.
FIG. 2 is a system diagram showing the redirection of user data items from a network server (host system) to the user's mobile data communication device, where the redirector software is operating at the server.
FIG. 3 is a block diagram showing the interaction of the redirector software with other components of the host system in FIG. 1 (the user's desktop PC) to enable the pushing of information from the host system to the user's mobile data communication device.
FIG. 4 is a flow chart showing the steps carried out by the redirector software operating at the host system.
FIG. 5 is a flow chart showing the steps carried out by the mobile data communication device to interface with the redirector software operating at the host system.
FIG. 6 is a system diagram showing the basic components of an IP based wireless data network, such as the GPRS network, for use with the present invention.
FIG. 7 is a detailed illustration of how addresses are dynamically assigned and how data tunnels are created and used within an IP based wireless network.
FIG. 8 sets forth the steps to redirect data items over the IP based wireless network to a mobile device.
FIG. 9 is a data flow diagram that depicts how a store-and-forward gateway handles incoming data from redirector programs going to mobile devices.
FIG. 10 is a continuation of FIG. 9, and is a data flow diagram of how a mobile address to IP address mapping database is updated with external and internal events.
FIG. 11 is a data flow diagram of the mobile device's logic for communicating with the store-and-forward gateway.
FIG. 12 is an illustrative system diagram of a proposed dual mode device that could be used with the invention.
FIGS. 13a and 13b are sequence diagrams illustrating actions taken at the mobile, DHCP and store and forward gateway after a connection request command is made to the mobile.

### DETAILED DESCRIPTION OF THE DRAWINGS

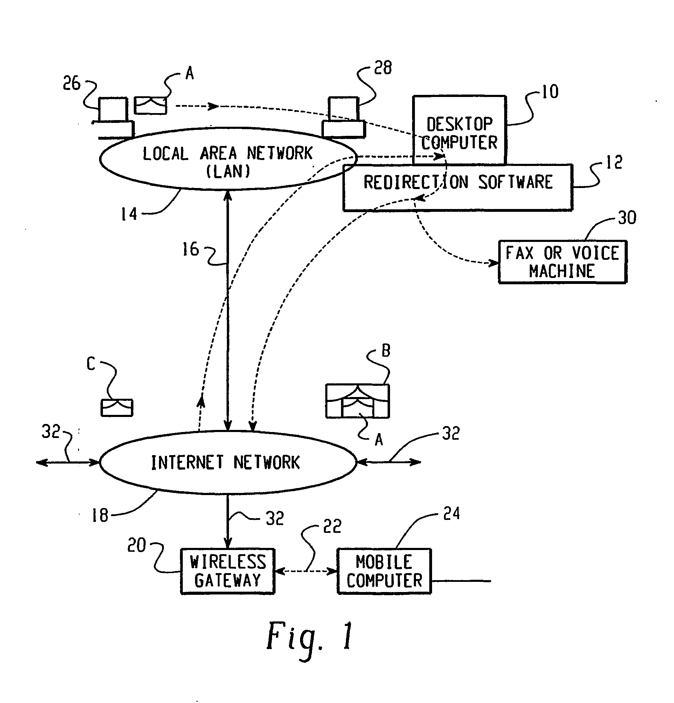

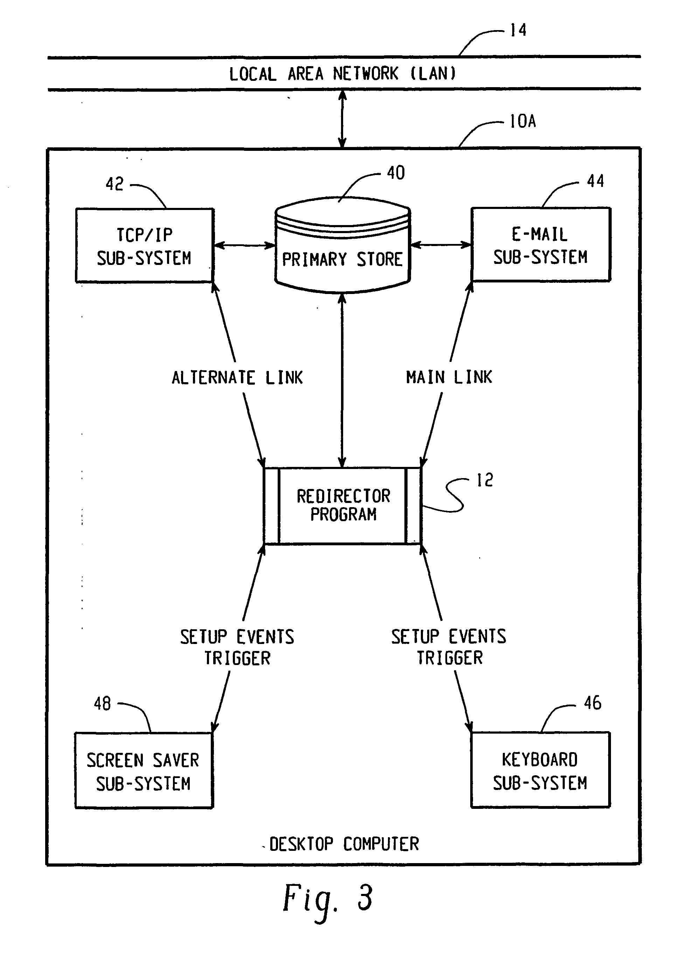

Referring now to the drawings, FIG. 1 is an example system diagram showing the redirection of user data items (such as message A or C) from a user's office PC (host system) 10 to the user's mobile data communication device 24,
where the redirector software 12 is operating at the user's PC. Message A in FIG. 1 represents an internal message sent from desktop 26 to the user's host system 10 via LAN 14. Message C in FIG. 1 represents an external message from a sender that is not directly connected to LAN 14, such as the user's mobile data communication device 24, some other user's mobile device (not shown), or any user connected to the Internet 18. Message C also represents a command message from the user's mobile data communication device 24 to the host system 10. As described in more detail in FIG. 3, the term "host system" 10 preferably includes, along with the typical hardware and software associated with a workstation or desktop computer, the redirector program 12, a TCP/IP subsystem 42, a primary message store 40, an E-mail subsystem 44, a screen saver subsystem 48, and a keyboard subsystem 46. The E-mail subsystem may be composed of one or more message servers (not necessarily the same type of message server) linked via communication means for the purposes of sending and receiving E-mail between workstations in the LAN, the Internet, and one or more Intranets or other proprietary private networks.

In FIG. 1, the host system 10 is the user's desktop system, typically located in the user's office. The host system 10 is connected to a LAN 14, which also connects to other computers 26, 28 that may be in the user's office or elsewhere. The LAN 14, in turn, is connected to a wide area network ("WAN") 18, such as the Internet, which is defined by the use of the Transmission Control Protocol/Internet Protocol ("TCP/IP") to exchange information, but which, alternatively, could be any other type of WAN. The connection of the LAN 14 to the WAN 18 is via high bandwidth link 16, typically a T1 or T3 connection. The WAN 18, in turn, is connected to a variety of gateways 20 via connections 32. A gateway forms a connection or bridge between the WAN 18 and some other type of network, such as an RF wireless network, cellular network, satellite network, or other synchronous or asynchronous land-line connection.

In the example of FIG. 1, a wireless gateway 20 is connected to the Internet for communicating via wireless link 22 to a plurality of wireless mobile data communication devices 24. For the purposes of this application description the term store-and-forward gateway 140 will also be used in place of the term wireless gateway 20. In an embodiment, the store and forward gateway may be referenced as a Access Point Name (APN) as defined on a network like GPRS. Also shown in FIG. 1 is external machine 30, which could be a FAX machine, a printer, a system for displaying images (such as video) or a machine capable of processing and playing audio files, such as a voice mail system. The present invention includes the ability to redirect certain message attachments to such an external machine 30 if the redirector program configuration data reflects that the mobile device 24 cannot receive and process the attachments, or if the user has specified that certain attachments are not to be forwarded to mobile device 24, even if such device can process those attachments. By way of example, consider an E-mail sent to a user that includes three attachments -- a word processing document, a video clip and an audio clip. The redirection program could be configured to send the text of the E-mail to the mobile device, to send the word processing document to a networked printer located near the user, to send the video clip to a store accessible through a secure connection through the Internet, and to send the audio clip to the user's voice mail system.

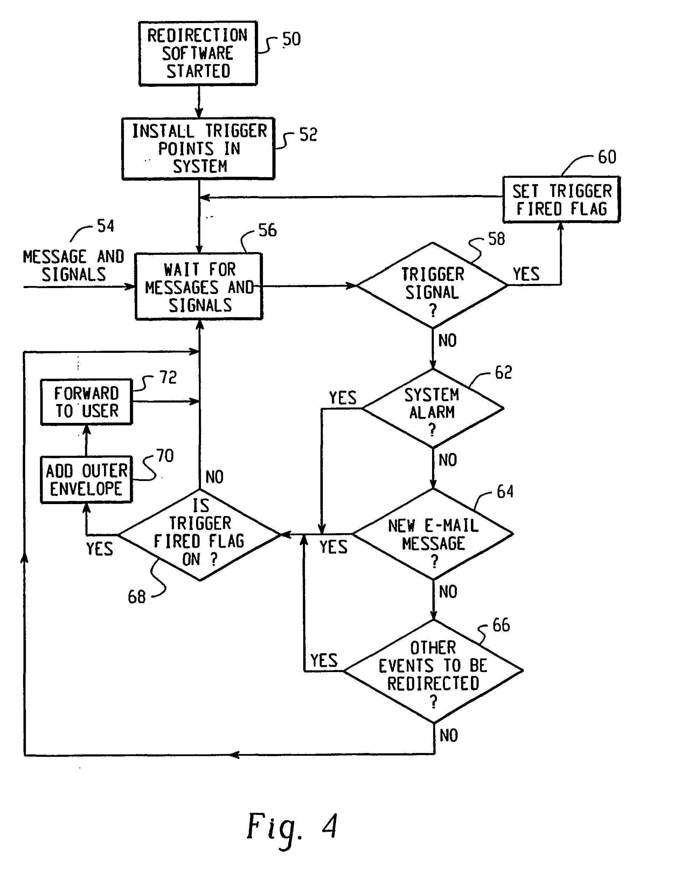

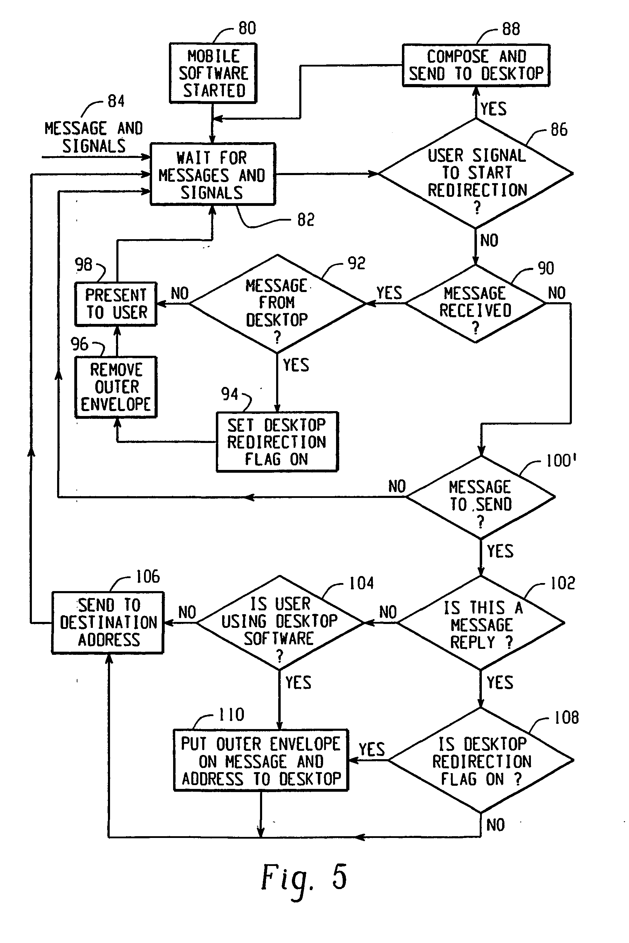

The preferred mobile data communication device 24 is a hand-held two-way wireless paging computer, a wirelessly enabled palm-top computer, a mobile telephone with data messaging capabilities, or a wirelessly enabled laptop computer, but could, alternatively be other types of mobile data communication devices capable of sending and receiving messages via a network connection 22. Although it is preferable for the system to operate in a two-way communications mode, certain aspects of the invention could be beneficially used in a "one and one-half' or acknowledgment paging environment, or even with a one-way paging system. The mobile data communication device 24 includes software program instructions that work in conjunction with the redirector program 12 to enable the seamless, transparent redirection of user-selected data items. FIG. 4 describes the basic method steps of the redirector program 12, and FIG. 5 describes the steps of the corresponding program operating at the mobile device 24.

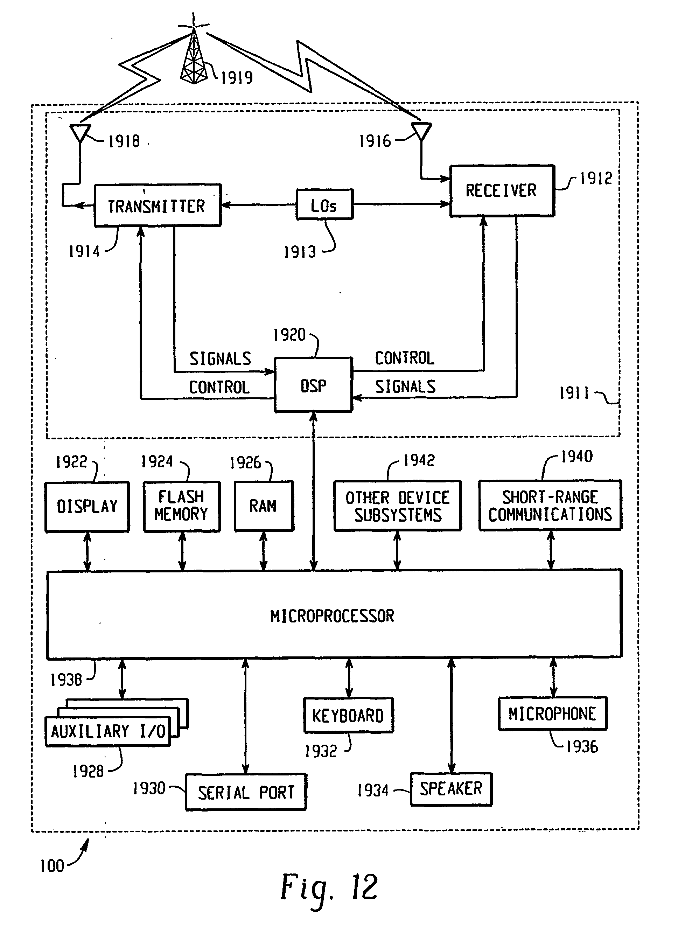

One example of a dual-mode device is shown in FIG. 12. The mobile communication device 24 shown in Fig. 12 is preferably a two-way communication device having at least voice and data communication capabilities. The device preferably has the ability to communicate with other computer systems on the Internet. Depending on the functionality provided by the device, the device may be referred to as a data messaging device, a two-way pager, a cellular telephone with data messaging capabilities, a wireless Internet appliance or a data communication device (with or without telephony capabilities).

Where the device 24 is enabled for two-way communications, the device will incorporate a communication subsystem 1911, including a receiver 1912, a transmitter 1914, and associated components such as one or more, preferably embedded or internal, antenna elements 1916 and 1918, local oscillators (LOs) 1913, and a processing module such as a digital signal processor (DSP) 1920. As will be apparent to those skilled in the field of communications, the particular design of the communication subsystem 1911 will be dependent upon the communication network in which the device is intended to operate. For example, a device 24 destined for a North American market may include a communication subsystem 1911 designed to operate within the Mobitex^{™} mobile communication system or the DataTAC^{™} mobile communication system, whereas a device 24 intended for use in Europe may incorporate a General Packet Radio Service (GPRS) communication subsystem 1911.

Network access requirements will also vary depending upon the type of network 1919. For example, in the Mobitex and DataTAC networks, mobile devices 24 are registered on the network using a unique personal identification number or PIN associated with each device. In GPRS networks, however, network access is associated with a subscriber or user of a device 24. A GPRS device therefore requires a subscriber identity module (not shown), commonly referred to as a SIM card, in order to operate on a GPRS network. Without a SIM card, a GPRS device will not be fully functional. Local or non-network communication functions (if any) may be operable, but the device 24 will be unable to carry out any functions involving communications over the network 1919. When required network registration or activation procedures have been completed, a device 24 may send and receive communication signals over the network 1919. Signals received by the antenna 1916 through a communication network 1919 are input to the receiver 1912, which may perform such common receiver functions as signal amplification, frequency down conversion, filtering, channel selection and the like, and in the example system shown in Fig. 19, analog to digital conversion. Analog to digital conversion of a received signal allows more complex communication functions, such as demodulation and decoding to be performed in the DSP 1920. In a similar manner, signals to be transmitted are processed, including modulation and encoding, for example, by the DSP 1920 and input to the transmitter 1914 for digital to analog conversion, frequency up conversion, filtering, amplification and transmission over the communication network 1919 via the antenna 1918.

The DSP 1920 not only processes communication signals, but also provides for receiver and transmitter control. For example, the gains applied to communication signals in the receiver 1912 and transmitter 1914 may be adaptively controlled through automatic gain control algorithms implemented in the DSP 1920.

The device 24 preferably includes a microprocessor 1938, which controls the overall operation of the device. Communication functions, including at least data and voice communications, are performed through the communication subsystem 1911. The microprocessor 1938 also interacts with other device subsystems, such as the display 1922, flash memory 1924, random access memory (RAM) 1926, auxiliary input/output (I/O) subsystems 1928, serial port 1930, keyboard 1932, speaker 1934, microphone 1936, a short-range communications subsystem 1940 and any other device subsystems generally designated as 1942.

Some of the subsystems shown in FIG. 12 perform communication-related functions, whereas other subsystems may provide "resident" or on-device functions. Notably, some subsystems, such as keyboard 1932 and display 1922, for example, may be used for both communication-related functions, such as entering a text message for transmission over a communication network, and device-resident functions, such as a calculator or task list.

Operating system software used by the microprocessor 1938 is preferably stored in a persistent store, such as flash memory 1924, which may alternately be a read only memory (ROM) or similar storage element. Those skilled in the art will appreciate that the operating system, specific device applications, or parts thereof, may be temporarily loaded into a volatile store, such as RAM 1926. It is contemplated that received communication signals may also be stored to RAM 1926.

The microprocessor 1938, in addition to its operating system functions, preferably enables execution of software applications on the device. A predetermined set of applications that control basic device operations, including at least data and voice communication applications, for example, may be installed on the device 24 during manufacture. A preferred application that may be loaded onto the device may be a personal information manager (PIM) application having the ability to organize and manage data items relating to the device user such as, but not limited to, e-mail, calendar events, voice mails, appointments, and task items. Naturally, one or more memory stores would be available on the device to facilitate storage of PIM data items on the device. Such PIM application would preferably have the ability to send and receive data items, via the wireless network. In a preferred embodiment, the PIM data items are seamlessly integrated, synchronized and updated, via the wireless network, with the device user's corresponding data items stored or associated with a host computer system. Further applications may also be loaded onto the device 24 through the network 1919, an auxiliary I/O subsystem 1928, serial port 1930, short-range communications subsystem 1940 or any other suitable subsystem 1942, and installed by a user in the RAM 1926 or preferably a non-volatile store for execution by the microprocessor 1938. Such flexibility in application installation increases the functionality of the device and may provide enhanced on-device functions, communication-related functions, or both. For example, secure communication applications may enable electronic commerce functions and other such financial transactions to be performed using the device 24.

In a data communication mode, a received signal, such as a text message or web page download, will be processed by the communication subsystem 1911 and input to the microprocessor 1938, which will preferably further process the received signal for output to the display 1922, or alternatively to an auxiliary I/O device 1928. A user of device 24 may also compose data items, such as email messages, for example, using the keyboard 1932, which is preferably a complete alphanumeric keyboard or telephone-type keypad, in conjunction with the display 1922 and possibly an auxiliary I/O device 1928. Such composed items may then be transmitted over a communication network through the communication subsystem 1911.

For voice communications, overall operation of the device 24 is substantially similar, except that received signals would preferably be output to a speaker 1934 and signals for transmission would be generated by a microphone 1936. Alternative voice or audio I/O subsystems, such as a voice message recording subsystem, may also be implemented on the device 24. Although voice or audio signal output is preferably accomplished primarily through the speaker 1934, the display 1922 may also be used to provide an indication of the identity of a calling party, the duration of a voice call, or other voice call related information for example.

The serial port 1930 in Fig. 12 would normally be implemented in a personal digital assistant (PDA)-type communication device for which synchronization with a user's desktop computer (not shown) may be desirable, but is an optional device component. Such a port 1930 would enable a user to set preferences through an external device or software application and would extend the capabilities of the device by providing for information or software downloads to the device 24 other than through a wireless communication network. The alternate download path may, for example, be used to load an encryption key onto the device through a direct and thus reliable and trusted connection to thereby enable secure device communication.

A short-range communications subsystem 1940 is a further optional component, which may provide for communication between the device 1924 and different systems or devices, which need not necessarily be similar devices. For example, the subsystem 1940 may include an infrared device and associated circuits and components or a Bluetooth^{™} communication module to provide for communication with similarly-enabled systems and devices.

In an alternative embodiment of the present invention, the mobile device 24 also includes a redirector program. In this embodiment, user selected data items can be replicated from the host to the mobile device and vice versa. The configuration and operation of the mobile device 24 having a redirector program is similar to that described herein with respect to Figs. 1-4.

A user of the present invention can configure the redirector program 12 to push certain user-selected data items to the user's mobile device 24 when the redirector 12 detects that a particular user-defined event trigger (or trigger point) has taken place. User-selected data items preferably include E-mail messages, calendar events, meeting notifications, address entries, journal entries, personal alerts, alarms, warnings, stock quotes, news bulletins, corporate data (from an Intranet or from behind the corporate firewall), etc., but could, alternatively, include any other type of message that is transmitted to the host system 10, or that the host system 10 acquires through the use of intelligent agents, such as data that is received after the host system 10 initiates a search of a database or a website or a bulletin board. In some instances, only a portion of the data item is transmitted to the mobile device 24 in order to minimize the amount of data transmitted via the wireless network 22. In these instances, the mobile device 24 can optionally send a command message to the host system to receive more or all of the data item if the user desires to receive it.

Among the user-defined event triggers that can be detected by the redirector program 12 are in the preferred embodiment external events, internal events and networked events. External events preferably include: (1) receiving a command message (such as message C) from the user's mobile data communication device to begin redirection, or to execute some other command at the host, such as a command to enable the preferred list mode, or to add or subtract a particular sender from the preferred list; (2) receiving a similar message from some external computer; and (3) sensing that the user is no longer in the vicinity of the host system; although, alternatively, an external event can be any other detectable occurrence that is external to the host system. Internal events could be a calendar alarm, screen saver activation, keyboard timeout, programmable timer, or any other user-defined event that is internal to the host system. Networked events are user-defined messages that are transmitted to the host system from another computer coupled to the host system via a network to initiate redirection. These are just some of the events that could be used with the present invention to initiate replication of the user-selected data items from the host system 10 to the mobile device 24.

FIG. 1 shows an E-mail message A being communicated over LAN 14 from computer 26 to the user's desktop system 10 (also shown in FIG. 1 is an external message C, which could be an E-mail message from an Internet user, or could be a command message from the user's mobile device 24). Once the message A (or C) reaches the primary message store of the host system 10, it can be detected and acted upon by the redirection software 12. The redirection software 12 can use many methods of detecting new messages. The preferred method of detecting new messages is using a message server like Microsoft's® Messaging API (MAPI), IMAP4 server or Lotus Notes messaging API, in which programs, such as the redirector program 12, register for notifications or 'advise syncs' when changes to a mailbox take place. Other methods of detecting new messages could also be used with the present invention. This tight integration between the redirection program 12 and a messaging server effectively means the two programs are co-operating to provide a wireless extension to an existing messaging product. In another embodiment, the redirection program is an embedded component of the message server.

Assuming that the redirector program 12 is activated, and has been configured by the user (either through the sensing of an internal, network or external event) to replicate certain user data items (including messages of type A or C) to the mobile device 24, when the message A is received at the host system 10, the redirector program 12 detects its presence and prepares the message for redirection to the mobile device 24. In preparing the message for redirection, the redirector program 12 could compress the original message A, could compress the message header, or could encrypt the entire message A to create a secure link to the mobile device 24.

Also exchanged between the mobile device and the redirector 12 is a personal identification number (PIN) of the user's mobile device 24 such that the redirector 12 associates the mailbox of the user with a PIN. The PIN value could be selected by the manfacturer of the mobile device 24 and programmed into the mobile device 24. Alternatively, this PIN could be a network identifier such as MSISDN, or another value associated with the Subscriber Identity Module (SIM) such as the IMSI. This PIN will be processed by the store-and-forward gateway as it maps the PIN of the mobile device 24 to the currently assigned IP address. Other values that could be saved by the redirector program 12 could include: the type of device, and whether the device 24 can accept certain types of attachments, such as word processing or voice attachments. If the user's type of mobile device cannot accept these types of attachments, then the redirector 12 can be programmed to route the attachments to a fax or voice number where the user is located using an attached fax or voice machine 30.

The redirector may also be programmed with a preferred list mode that is configured by the user either at the host system 10, or remotely from the user's mobile data communication device by transmitting a command message C. The preferred list contains a list of senders (other users) whose messages are to be redirected or a list of message characteristics that determine whether a message is to be redirected. If activated, the preferred list mode causes the redirector program 12 to operate like a filter, only redirecting certain user data items based on whether the data item was sent from a sender on the preferred list or has certain message characteristics that if present will trigger or suppress redirection of the message. In the example of FIG. 1, if desktop system 26 was operated by a user on the preferred list of host system 10, and the preferred list option was activated, then message A would be redirected. If, however, desktop 26 was operated by a user not on the host system's preferred list, then message A would not be redirected, even if the user of the host system had configured the redirector to push messages of type A. The user of the host system 10 can configure the preferred list directly from the desktop system, or, alternatively, the user can then send a command message (such as C) from the mobile device 24 to the desktop system 10 to activate the preferred list mode, or to add or delete certain senders or message characteristics from the preferred list that was previously configured. It should be appreciated that a redirection program could combine message characteristics and preferred sender lists to result in a more finely-tuned filter. Messages marked as low priority or that are simple return receipts or message read receipts, for example, could always be suppressed from redirection while messages from a particular sender would always be redirected.

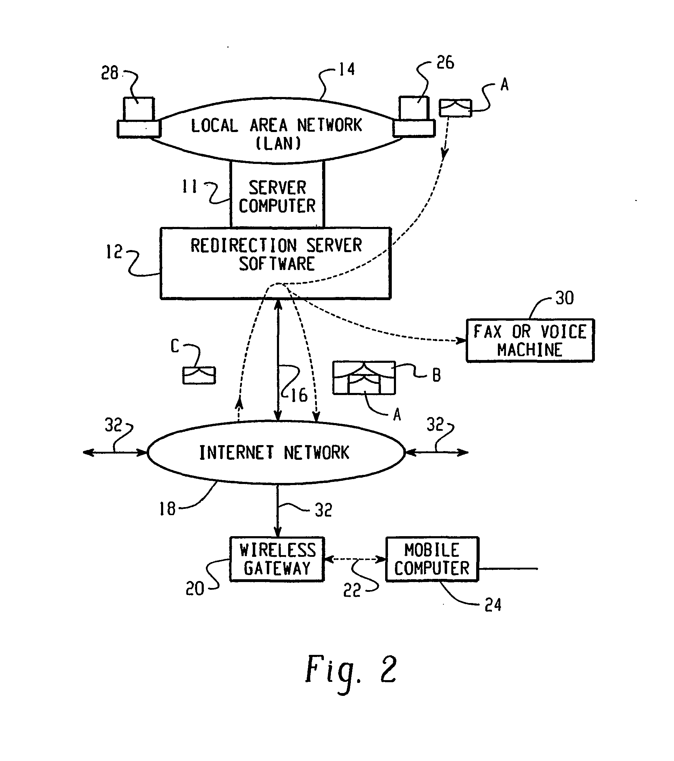

After the redirector has determined that a particular message should be redirected, and it has prepared the message for redirection, the software 12 then sends the message A to a secondary memory store located in the mobile device 24, using whatever means are necessary. In the preferred embodiment this method is to send the message A back over the LAN 14, WAN 18, and through the store-and-forward gateway 20 to the mobile data communication device 24. In doing so, the redirector preferably repackages message A as an E-mail with an outer envelope B that contains the addressing information of the mobile device 24, although alternative repackaging techniques and protocols could be used, such as a TCP/IP repackaging and delivery method (most commonly used in the alternative server configuration shown in FIG. 2). The wireless gateway 20 requires this outer envelope information B in order to know where to send the redirected message A. Once the message (A in B) is received by the mobile device 24, the outer envelope B is removed and the original message A is placed in the secondary memory store within the mobile device 24. By repackaging and removing the outer envelope in this manner, the present invention causes the mobile computer 24 to appear to be at the same physical location as the host system 10, thus creating a transparent system.

In the case where message C is representative of an external message from a computer on the Internet 18 to the host system 10, and the host 10 has been configured to redirect messages of type C, then in a similar manner to message A, message C would be repackaged with an outer envelope B and transmitted to the user's mobile device 24. In the case where message C is representative of a command message from the user's mobile device 24 to the host system 10, the command message C is not redirected, but is acted upon by the host system 10.

If the redirected user data item is an E-mail message, as described above, the user at the mobile device 24 sees the original subject, sender's address, destination address and carbon copy. When the user replies to this message, or when the user authors a new message, the software operating at the mobile device 24 adds a similar outer envelope to the reply message (or the new message) to cause the message to be routed first to the user's host system 10, which then removes the outer envelope and redirects the message to the final destination, such as back to computer 26. In the preferred embodiment, this results in the outgoing redirected message from the user's host system 10 being sent using the E-mail address of the host mailbox, rather than the address of the mobile device, so that it appears to the recipient of the message that the message originated from the user's desktop system 10 rather than the mobile data communication device. Any replies to the redirected message will then be sent to the desktop system 10, which if it is still in redirector mode, will repackage the reply and resend it to the user's mobile data device, as described above.

FIG. 2 is an alternative system diagram showing the redirection of user data items from a network server 11 to the user's mobile data communication device 24, where the redirector software 12 is operating at the server 11. This configuration is particularly advantageous for use with message servers such as Microsoft's ® Exchange Server, Lotus™ Notes Message Server and IMAP4 Message Servers which is normally operated so that all user messages are kept in one central location or mailbox store on the server instead of in a store within each user's desktop PC. This configuration has the additional advantage of allowing a single system administrator to configure and keep track of all users having messages redirected. If the system includes encryption keys, these too can be kept at one place for management and update purposes.

In this alternative configuration, server 11 preferably maintains a user profile for each user's desktop system 10, 26, 28, including information such as whether a particular user can have data items redirected, which types of message and information to redirect, what events will trigger redirection, the PIN of the users' mobile data communication device 24, the type of mobile device, and the user's preferred list, if any. The event triggers are preferably detected at the user's desktop system 10, 26, 28 and can be any of the external, internal or network events listed above. The desktop systems 10, 26, 28 preferably detect these events and then transmit a message to the server computer 11 via LAN 14 to initiate redirection. Although the user data items are preferably stored at the server computer 11 in this embodiment, they could, alternatively, be stored at each user's desktop system 10, 26, 28, which would then transmit them to the server computer 11 after an event has triggered redirection.

As shown in FIG. 2, desktop system 26 generates a message A that is transmitted to and stored at the host system 11, which is the network server operating the redirector program 12. The message A is for desktop system 10, but in this embodiment, user messages are stored at the network server 11. When an event occurs at desktop system 10, an event trigger is generated and transmitted to the network server 11, which then determines who the trigger is from, whether that desktop has redirection capabilities, and if so, the server (operating the redirector program) uses the stored configuration information to redirect message A to the mobile computer 24 associated with the user of desktop system 10.

As described above with reference to FIG. 1, message C could be either a command message from a user's mobile data communication device 24, or it could be a message from an external computer, such as a computer connected to the Internet 18. If the message C is from an Internet computer to the user's desktop system 10, and the user has redirection capabilities, then the server 11 detects the message C, repackages it using electronic envelope B, and redirects the repackaged message (C in B) to the user's mobile device 24. If the message C is a command message from the user's mobile device 24, then the server 11 simply acts upon the command message.

Turning now to FIG. 3, a block diagram showing the interaction of the redirector software 12 with additional components of the host system 10 of FIG. 1 (the desktop PC) to enable more fully the pushing of information from the host system 10 to the user's mobile data communication device 24 is set forth. These additional components are illustrative of the type of event-generating systems that can be configured and used with the redirector software 12, and of the type of repackaging systems that can be used to interface with the mobile communication device 24 to make it appear transparent to the user.

The desktop system 10 is connected to LAN 14, and can send and receive data, messages, signals, event triggers, etc., to and from other systems connected to the LAN 14 and to external networks 18, 22, such as the Internet or a wireless data network, which are also coupled to the LAN 14. In addition to the standard hardware, operating system, and application programs associated with a typical microcomputer or workstation, the desktop system 10 includes the redirector program 12, a TCP/IP sub-system 42, an E-mail sub-system 44, a primary data storage device 40, a screen saver sub-system 48, and a keyboard sub-system 46. The TCP/IP and E-mail subsystems 42, 44 are examples of repackaging systems that can be used to achieve the transparency of the present invention, and the screen saver and keyboard sub-systems 46, 48 are examples of event generating systems that can be configured to generate event messages or signals that trigger redirection of the user selected data items.

The method steps carried out by the redirector program 12 are described in more detail in FIG. 4. The basic functions of this program are: (1) configure and setup the user-defined event trigger points that will start redirection; (2) configure the types of user data items for redirection and optionally configure a preferred list of senders whose messages are to be redirected; (3) configure the type and capabilities of the user's mobile data communication device; (4) receive messages and signals from the repackaging systems and the event generating systems; and (5) command and control the redirection of the user-selected data items to the mobile data communication device via the repackaging systems. Other functions not specifically enumerated could also be integrated into this program.

The E-Mail sub-system 44 is the preferred link to repackaging the user-selected data items for transmission to the mobile data communication device 24, and preferably uses industry standard mail protocols, such as SMTP, POP, IMAP, MIME and RFC-822, to name but a few. The E-Mail sub-system 44 can receive messages A from external computers on the LAN 14, or can receive messages C from some external network such as the Internet 18 or a wireless data communication network 22, and stores these messages in the primary data store 40. Assuming that the redirector 12 has been triggered to redirect messages of this type, the redirector detects the presence of any new messages and instructs the E-Mail system 44 to repackage the message by placing an outer wrapper B about the original message A (or C), and by providing the addressing information, i.e. PIN value of the mobile data communication device 24 on the outer wrapper B. As noted above, this outer wrapper B is removed by the mobile device 24, and the original message A (or C) is then recovered, thus making the mobile device 24 appear to be the desktop system 10.

In addition, the E-Mail sub-system 44 receives messages back from the mobile device 24 having an outer wrapper with the addressing information of the desktop system 10, and strips this information away so that the message can be routed to the proper sender of the original message A (or C). The E-Mail subsystem also receives command messages C from the mobile device 24 that are directed to the desktop system 10 to trigger redirection or to carry out some other function. The wireless enablement of the E-Mail sub-system 44 is made possible through the redirector program 12.

The TCP/IP sub-system 42 is an alternative repackaging system. It includes all of the functionality of the E-Mail sub-system 44, but instead of repackaging the user-selected data items as standard E-mail messages, this system repackages the data items using special-purpose TCP/IP packaging techniques. This type of special-purpose sub-system is useful in situations where security and improved speed are important to the user. The provision of a special-purpose wrapper that can only be removed by special software on the mobile device 24 provides the added security, and the bypassing of E-mail store and forward systems can improve speed and real-time delivery.

As described previously, the present invention can be triggered to begin redirection upon detecting numerous external, internal and networked events, or trigger points. The screen saver and keyboard sub-systems 46, 48 are examples of systems that are capable of generating internal events. Functionally, the redirector program 12 provides the user with the ability to configure the screen saver and keyboard systems so that under certain conditions a event trigger will be generated that can be detected by the redirector 12 to start the redirection process. For example, the screen saver system can be configured so that when the screen saver is activated, after, for example, 10 minutes of inactivity on the desktop system, an event trigger is transmitted to the redirector 12, which starts redirecting the previously selected user data items. In a similar manner the keyboard sub-system can be configured to generate event triggers when no key has been depressed for a particular period of time, thus indicating that redirection should commence. These are just two examples of the numerous application programs and hardware systems internal to the host system 10 that can be used to generate internal event triggers.

FIGs. 4 and 5, set forth, respectively, flow charts showing the steps carried out by the redirector software 12 operating at the host system 10, and the steps carried out by the mobile data communication device 24 in order to interface with the host system. Turning first to FIG. 4, at step 50, the redirector program 12 is started and initially configured. At this stage all settings are cleared and reset, including the trigger forwarding flag. The initial configuration of the redirector 12 includes: (1) defining the event triggers that the user has determined will trigger redirection; (2) selecting the user data items for redirection; (3) selecting the repackaging sub-system, either standard E-Mail, or special-purpose technique; (4) selecting the type of data communication device, indicating whether and what type of attachments the device is capable of receiving and processing, and saving the current PIN for the mobile device; and (5) configuring the preferred list of user selected senders whose messages are to be redirected.

The redirector program preferably adds a permanent identifier on the outer envelop during the repackaging step. Advantagously this permits association of the data items upon arrival at the store-and-forward gateway with the mobile devices newly assigned network address. Since the IP address associated to the mobile device could change, the permanent identifier used by the redirector program could be a manufacturing number assigned when the unit is built, a value from the SIM card, or a network specific identifer.

FIG. 4 sets forth the basic steps of the redirector program 12 assuming it is operating at a desktop system 10, such as shown in FIG. 1. If the redirector 12 is operating at a network server 11, as shown in FIG. 2, then additional configuration steps may be necessary to enable redirection for a particular desktop system 10, 26, 28 connected to the server, including: (1) setting up a profile for the desktop system indicating its address, events that will trigger redirection, and the data items that are to be redirected upon detecting an event; (2) maintaining a storage area at the server for the data items; and (3) storing the type of data communication device to which the desktop system's data items are to be redirected, whether and what type of attachments the device is capable of receiving and processing, and the PIN value of the mobile device.

Once the redirector program is configured 50, the trigger points (or event triggers) are enabled at step 52. The program 12 then waits 56 for messages and signals 54 to begin the redirection process. A message could be an E-Mail message or some other user data item than may have been selected for redirection, and a signal could be a trigger signal, or could be some other type of signal that has not been configured as an event trigger. When a message or signal is detected, the program determines 58 whether it is one of the trigger events that has been configured by the user to signal redirection. If so, then at step 60 a trigger flag is set, indicating that subsequently received user data items (in the form of messages) that have been selected for redirection should be pushed to the user's mobile data communication device 24.

If the message or signal 54 is not a trigger event, the program then determines at steps 62, 68 and 66 whether the message is, respectively, a system alarm 62, an E-Mail message 64, or some other type of information that has been selected for redirection. The other event might also be if the user turns off the triggering flag, by either placing the device back into the serial cradle, or by sending a command to the redirector software to stop redirection. If the message or signal is none of these three items, then control returns to step 56, where the redirector waits for additional messages 54 to act upon. If, however the message is one of these three types of information, then the program 12 determines, at step 68, whether the trigger flag has been set, indicating that the user wants these items redirected to the mobile device. If the trigger flag is set, then at step 70, the redirector 12 causes the repackaging system (E-Mail or TCP/IP) to add the outer envelope to the user data item, and at step 72 the repackaged data item is then redirected to the user's mobile data communication device 24 via LAN 14, WAN 18, wireless gateway 20 and wireless network 22. Control then returns to step 56
where the program waits for additional messages and signals to act upon. Although not shown explicitly in FIG. 4, after step 68, the program could, if operating in the preferred list mode, determine whether the sender of a particular data item is on the preferred list, and if not, then the program would skip over steps 70 and 72 and proceed directly back to step 56. If the sender was on the preferred list, then control would similarly pass to steps 70 and 72 for repackaging and transmission of the message from the preferred list sender.

FIG. 5 sets forth the method steps carried out by the user's mobile data communication device 24 in order to interface to the redirector program 12 of the present invention. At step 80 the mobile software is started and the mobile device 24 is configured to operate with the system of the present invention, including, for example, storing the address or an identification value of the user's desktop system or host system 10.

At step 82, the mobile device waits for messages and signals 84 to be generated or received. Assuming that the redirector software 12 operating at the user's desktop system 10 is configured to redirect upon receiving a message from the user's mobile device 24, at step 86, the user can decide to generate a command message that will start redirection. If the user does so, then at step 88 the redirection message is composed and sent to the desktop system 10 via the wireless network 22, through the wireless gateway 20, via the Internet 18 to the LAN 14, and is finally routed to the desktop machine 10. In this situation where the mobile device 24 is sending a message directly to the desktop system 10, no outer wrapper is added to the message (such as message C in FIGs. 1 and 2).

In addition to the redirection signal, the mobile device 24 could transmit any number of other commands to control the operation of the host system, and in particular the redirector program 12. For example, the mobile 24 could transmit a command to put the host system into the preferred list mode, and then could transmit additional commands to add or subtract certain senders from the preferred list. In this manner, the mobile device 24 can dynamically limit the amount of information being redirected to it by minimizing the number of senders on the preferred list. Other example commands include: (1) a message to change the configuration of the host system to enable the mobile device 24 to receive and process certain attachments; and (2) a message to instruct the host system to redirect an entire data item to the mobile device in the situation where only a portion of a particular data item has been redirected. Another embodiment of a command process would be when the mobile device 24 sends a search command (preferably with search parameters associated therewith) to the host system 10, which in turn triggers (or initiates) a search on an associated database that in turn produces search results that are returned to the mobile device 24 at a later time.

Turning back to FIG. 5, if the user signal or message is not a direct message to the desktop system 10 to begin redirection (or some other command), then control is passed to step 90, which determines if a message has been received. If a message is received by the mobile, and it is a message from the user's desktop 10, as determined at step 92, then at step 94 a desktop redirection flag is set "on" for this message, and control passes to step 96 where the outer envelope is removed. Following step 96, or in the situation where the message is not from the user's desktop, as determined at step 92, control passes to step 98, which displays the message for the user on the mobile device's display. The mobile unit 24 then returns to step 82 and waits for additional messages or signals.

If the mobile device 24 determines that a message has not been received at step 90, then control passes to step 100', where the mobile determines whether there is a message to send. If not, then the mobile unit returns to step 82 and waits for additional messages or signals. If there is at least one message to send, then at step 102 the mobile determines whether it is a reply message to a message that was received by the mobile unit. If the message to send is a reply message, then at step 108, the mobile determines whether the desktop redirection flag is on for this message. If the redirection flag is not on, then at step 106 the reply message is simply transmitted from the mobile device to the destination address via the wireless network 22. If, however, the redirection flag is on, then at step 110 the reply message is repackaged with the outer envelope having the addressing information of the user's desktop host system 10, and the repackaged message is then transmitted to the host system 10 at step 106. As described above, the redirector program 12 executing at the host system then strips the outer envelope and routes the reply message to the appropriate destination address using the address of the user's e-mail account associated with the host system as the "from" field, so that to the recipient of the redirected message, it appears as though it originated from the user's host system rather than the mobile device. In an alternative embodiment a tag or signature line is added to the message (at either the device or the host system) to indicate that it has been sent from a mobile device 24 whilst the mobile device and host system continue to share a common single email address. This integrated common email address provides the host system (desktop or server system) with seamless wireless connectivity to the mobile device.

If, at step 102, the mobile device determines that the message is not a reply message, but an original message, then control passes to step 104, where the mobile determines if the user is using the redirector software 12 at the host system 10, by checking the mobile device's configuration. If the user is not using the redirector software 12, then the message is simply transmitted to the destination address at step 106. If, however, the mobile determines that the user is using the redirector software 12 at the host system 10, then control passes to step 110, where the outer envelope is added to the message. The repackaged original message is then transmitted to the host system 10 at step 106, which, as described previously, strips the outer envelope and routes the message to the correct destination. Following transmission of the message at step 106, control of the mobile returns to step 82 and waits for additional messages or signals.

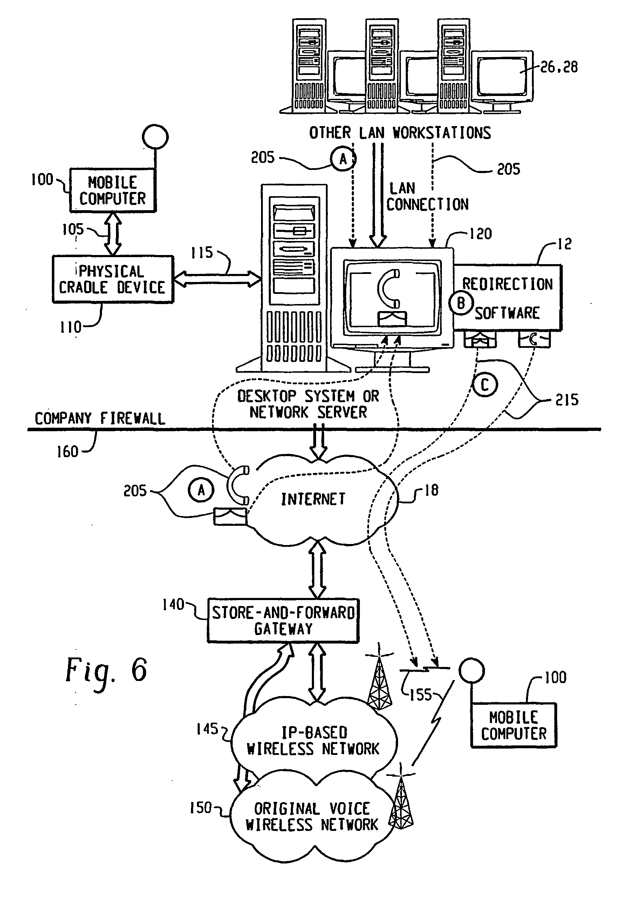

Turning now to the remaining drawing figures, FIGs. 6-11 depict a system and method for redirecting data from a host system to one or more mobile devices via a wireless packet data network. The wireless packet data network is of the type that dynamically assigns network addresses to the one or more mobile data communication devices on an as-needed basis. A redirector program operating at the host system is configured by each user, or a network adminstrator to continuously redirect certain data to the wireless packet data network, as the data is received (or otherwise altered) at the host system. At least two methods are provided for communicating the redirected data from the wireless packet data network to the mobile device. In a first method, the mobile device is configured to periodically contact a store-and-forward server (or gateway) operating in conjunction with the wireless network. When contacted, the store-and-forward server maps the current IP address being used by the mobile device 24 to the PIN value associated to the mobile device 24. As data arrives (for example, redirected data from the host system) the store-and-forward gateway transmits any stored, redirected data to the mobile device 24. The periodic contact by the mobile device is used to ensure the assigned value (IP address) is correct with the gateway. In a second method, the store and forward gateway or the network transmits a connection request command to the mobile device via a push bearer network, for example like a parallel voice network, or via a command channel, or via some other type of low-bandwidth data channel. The mobile device then contacts the network and requests a network address, i.e. an IP address, so that the store-and-forward server can send the redirected data to the mobile device 24. Preferably, this connection request command is only used when the gateway fails in 'pushing' a message to the device, or the assigned IP address has been revoked. The GPRS network may spontaneously revoke an IP address assigned to a mobile device due to inactivity. This revoking of the IP address would then be detected through the DHCP server, or via an idle timer being run within the store-and-forward gateway.

FIG. 6 is a system diagram showing the basic components of an IP based wireless data network, such as the GPRS network, for use with the present invention. In the case of FIG. 6, the mobile device 100 (also referenced as mobile device 24 in earlier figures) is shown as being in communication with the host system 120, via a short-range RF communication link, a serial link, or any other suitable connection 105. When the mobile device is communicating to the host via connection 115, it is said to be 'docked' with the host system 120 for the purposes of this description. Preferably the mobile device 100 communicates with a wireless packet data network 145 when not "docked," and may also be capable of communicating with a voice wireless network 150. The voice network 150 may be associated with the IP based wireless network 145, or it could be a completely separate network. A mobile device 100 that can communicate via networks145 and 150 is referred to herein as a dual-mode device. The invention, however, is applicable to single-mode devices and other multi-mode devices, not just dual-mode devices. Although depicted as separate networks, the IP based wireless network 145 and the voice wireless network 150 are not necessarily mutually exclusive, and could be operating simultaneously with the same network hardware, *i.e.,* they may be part of a single dual-mode network.

In one embodiment, when a serial docking cradle 110 is used as a means of docking or undocking the mobile device 100, the serial docking cradle preferably has the ability to inform the redirector program 12 when the mobile device 100 is not in the cradle and therefore should be reached by the IP based wireless network 145. Preferably, only when the mobile device 100 is in the serial cradle 110, and behind the company's firewall 160, can it exchange shared secrets such as encryption keys, with the user's host system 120. Advantageously, these shared secrets can then be used by the redirection system to encrypt all data items being exchanged over the network 145.

The redirector program 12 may also have the ability to compress information that is redirected to the mobile device 100, and thus increase data transfer rates through any delivery mechanism that is used. The redirector program 12 may also connect to a wide range of other devices, such as home or office alarm systems, personal monitoring equipment, such as a vital sign monitor, motion detectors, Internet web sites, e-mail message stores, PBX information storage, customer databases, proprietary software applications, Intranet-based data stores and other information sources, for the purpose of collecting information to redirect to the mobile device 100.

As described above, the present invention preferably provides a redirection computer program ("redirector program") 12, operating within (or in conjunction with) the host system 120, behind a corporate firewall 160. Preferably in conjunction with a message server or some other hardware or software mechanism, the redirector 12 senses that a particular event has occurred, and redirects user-selected data items from the host system 120 to the user's mobile device 100. In one embodiment, the redirector program 12 also interfaces to a mobile device cradle component 110, over a serial connection 115, or some other suitable computer communication method, so that the redirector program 12 can detect the physical location, as well as other information, of the mobile device 100. The mobile device cradle component 110 provides a communication node (or a physical serial link 105) for the mobile device 100 that allows the user to dock the mobile device 100 when the user is in their office. Alternatively, connection 105 could be a wireless connection, such as a short-range RF connection. This docking procedure is one method for exchanging bulk personal information locally (versus over a wireless communication network), such as, but not limited to, e-mail messages, calendar events, contacts, notes, and security information like encryption keys.

The host system/redirector program 120/12 are also coupled to an external network 18, such as the Internet. The external network 18 could be the Internet, a company Intranet, and Extranet, a private network like an America On Line ("AOL™") network, a LAN, or some other network capable of exchanging information. The connection between the host system 120 and this external network 18 could use a range of existing technologies, such as Ethernet, Cable Modem, DSL, ISDN, or Frame Relay.

By coupling to the external network 18, the redirector program 12 has another communication path to reach the mobile device 100, if the mobile device is not docked with the host system 120. As shown in FIG. 6, the external network/Internet 18 is further coupled to a store-and-forward gateway (also referred to herein as a store-and-forward system or a store-and-forward gateway) 140 that provides a communication bridge between the external network 18 and an IP based wireless network 145 and, if applicable, a voice wireless network 150.

The store-and-forward gateway 140 performs routing and addressing functions allow information to be pushed to a mobile device 100 in the IP based wireless network 145. The store-and-forward gateway 140 stores information from the redirector program 12 for a particular user until the user's mobile device 100 has acquired a network address (on the IP based wireless network 145). Once a network address is acquired, the store-and-forward gateway 140 forwards the stored, redirected information to the user's mobile device 100. In this manner, the gateway 140 operates as a store-and-forward system. Another function of the store-and-forward gateway 140 is to bridge dissimilar networks and allow for data flow in both directions to and from the mobile device 100. In the illustration these dissimilar networks include the Internet and the IP-based wireless network. Although they share a common network layer, i.e. the IP layer, their speeds and capabilities are so different that protocols like TCP cannot work reliably over both at the same time. Once data is delivered to the IP based wireless network 145, it can be routed to the mobile device 100 and received via an RF link 155.

The term IP based wireless network includes, but is not limited to (1) the Code Division Multiple Access (CDMA) network that has been developed and operated by Qualcomm, (2) the General Packet Radio Service (GPRS) for use in conjunction with the Global System for Mobile Communications (GSM) network both developed by the standards committee of CEPT, and (3) future third-generation (3G) networks like EDGE and UMTS. GPRS is a data communications overlay on top of the GSM wireless network. It is to be understood that although an IP based wireless network is shown in FIG. 6, the present invention could be utilized with other types of wireless packet data network.

FIG. 6 shows the desktop system or network server 120 coupled to other workstations 26, 28 on a traditional LAN. For those skilled in the art, the techniques to couple computer programs between LAN workstations and LAN servers are well known. It is also well known in the art that the LAN can now extend to remote branch offices and other countries using Virtual Private Networks (VPNs) and other advanced wide-area, high-speed LAN technology. These other computers 26, 28, as well as systems operating on other, external networks, may operate to transmit data 205 to the host system 120, where the data is received and stored.

The redirector program 12 operates either at a desktop workstation, or within a network server 120, or in conjunction with a message server, or directly within a message server which receives data items 205 for a particular user. When the redirector program 12 is configured at a network server, it can monitor the data items 205 for many users simultaneously. The data items 205 may originate from Internet sources 18, from other LAN workstations 26, 28, from other mobile users, or from some external source, such as a PSTN connection into the host system. These data items 205 could include: (1) company phone calls, (2) corporate intranet and Internet e-mail, (3) corporate inventory records, (4) corporate sales projects, (5) corporate sales and marketing forms, (6) company field service records, (7) company call dispatch requests, (8) real-time phone calls, (9) instant messages from instant messaging gateways, (10) company or home alarm data, (11) motion and video sensors, (12) heart monitors and vital statistic monitors, (13) fluid levels and large equipment feedback statistics, (14) corporate and personal PIM data, as well as other data types not explicitly mentioned.

To understand the flow of data in the system shown in FIG. 6, each of the major steps are labeled (A), (B) and (C). Step (A) shows the origination of data items 205, for instance on the Internet 18, which flow into the user's corporate environment through the firewall 160 to the host system 120. Similar data items 205, also labeled as (A), are shown flowing into the desktop system or network server 120 from LAN-based workstations 26, 28.

The second step (B) occurs when the redirector application 12 detects the data items 205 at the host system 120, and the redirection criteria set up by the user or network administrator have been met. Having preferably pre-selected the type(s) and class(es) of data items 205 for redirection, the redirector 12 may provide the user with additional controls for limiting, filtering and monitoring all data items 205 that could be redirected to their mobile device 100. The redirector program 12 may provide the following functions: (a) when to redirect data items 205 based on user-defined triggers such as location information, heat sensors, motion detectors and screen savers, (b) providing configuration information, such as filters, desired data types 205 and mobile device 100 capabilities, and (c) continuously redirecting data items 205 as they arrive at the host system 120, in real-time, to the mobile device 100.

Finally, in step (C), the redirector program 12 repackages the data items 215 so that complete transparency is maintained for the sender and the receiver of the data item, and transmits the data items out through the corporate firewall 160 to the mobile device 100 via the external network 18 and the wireless packet data network 145. Preferably, the transparency feature permits all addressing information (such as the 'TO', 'CC', and 'FROM' fields), subjects and content fields to be kept intact provided that the mobile device can support all elements of the original data item 205.

Once the original data item 205 is repackaged it is delivered along a path to the IP based wireless network 145, via the store-and forward gateway normally through a connection to the Internet 18. A person skilled in the art would also appreciate that there may be many other methods to reach the store-and-forward gateway like a direct point-to-point connection, which is more common when security and speed are major issues. Step (C) may be optionally skipped when the device is docked at the host system 120. The user may not want any data items 215 forwarded to the mobile device 100 when they are sitting at their desktop computer system 120, or logged into the office network computer system and are capable of accessing their message store assocated with the message server at the host system (via a networked computer).

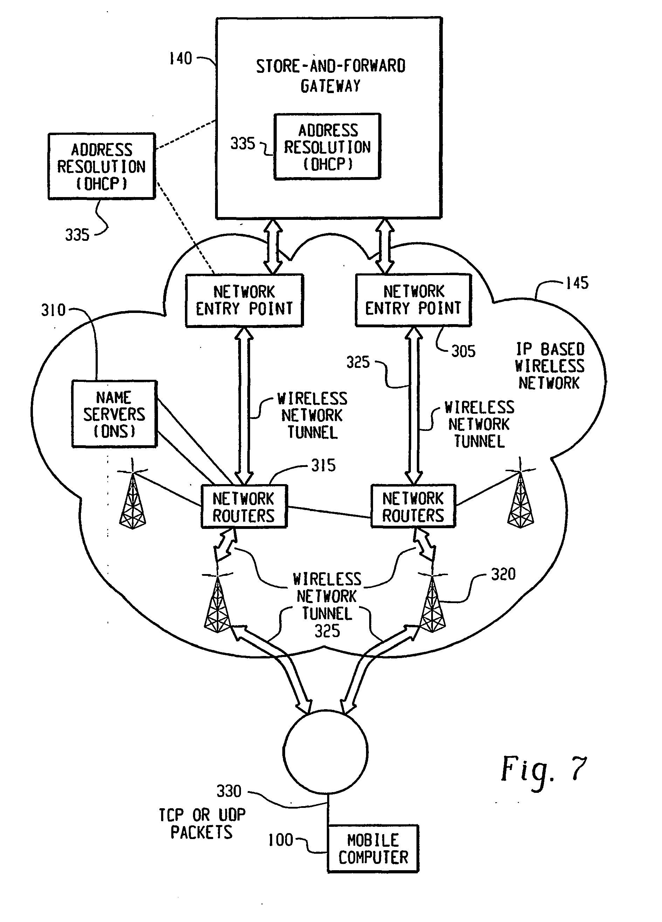

FIG. 7 is a detailed illustration of how addresses are dynamically assigned and how data tunnels are created in an IP based wireless network. Several components typically make up an IP based wireless network 145, including a store-and-forward gateway 140 (or store-and-forward gateway), which may be coupled to an internal or external address assignment component 335, a plurality of network entry points 305, one or more name servers 310, network routers 315, and a plurality of base stations 320. These components are used to transmit data packets to the mobile device 100 by setting up a wireless network tunnel 325 from the gateway 140 to the mobile device 100. In order to create this wireless network tunnel, a unique network address must be associated with the mobile device. In an IP based wireless network, however, network addresses are not permanently assigned to a particular mobile device 100, but instead are dynamically allocated on an as-needed basis. It is thus necessary for the mobile device to acquire a network address, and for the store-and-forward gateway 140 to learn this address so as to establish the wireless network tunnel 325. An example of the network shown in FIG. 7 is the GRPS network.

The GPRS IP based data network is an overlay over the GSM voice network. In this network, the GPRS components will either extend existing GSM components, such as the base stations, or could cause additional components to be added, like an advanced Gateway GPRS Support Node (GGSN) network entry point 305.

The network entry point 305 is generally used to multiplex and demultiplex between many gateways, corporate servers and bulk connections like the Internet 18. There are normally very few of these network entry points 305 as they are also intended to centralize externally available wireless network services. The network entry point 305 often uses some form of address assignment component 335 that assists in address assignment and lookup between gateways 145 and mobile devices 100. In this example, the dynamic host configuration protocol (DHCP 335) is shown as one method for providing an address assignment mechanism. The invention, however, is not limited to networks that use DHCP.

A component of the wireless data network 145 is a network router 315. Normally these network routers 315 are proprietary to the particular network, but they could be constructed from standard off-the-shelf hardware as well. Their purpose is to centralize the thousands of base stations 320 into a central location for a long-haul connection back to the network entry point 305. In some networks there could be multiple tiers of network routers 315, and cases where there are master and slave network routers 315, but in all cases the functions are similar. Often the network router 315 will access a name server 310, in this case shown as a Domain Name System (DNS) 310 as used in the Internet, to look up destinations for routing data messages. The base stations 320 act as the Radio Frequency (RF) link to the mobile devices 100.

A problem faced by most IP based wireless networks 145 is that the wireless equipment (FIG. 7) is more complex than a traditional (i.e., wireline) IP network, and includes advanced proprietary hardware, that does not rely exclusively on IP as the communication standard. Other protocols for transferring information over the wireless network 145 are required. Therefore, it becomes necessary for devices on these networks to open wireless network tunnels 325 across the wireless network 145 in order to allocate the necessary memory, routing and address resources to deliver IP packets.

This tunneling operation is illustrated in FIG. 7 as the mobile device 100 opens a wireless network tunnel 325 across the network 145. To open this tunnel 325, the mobile device 100 preferably uses a wireless network 145 specific technique. In GPRS, for example, these tunnels 325 are called Packet Data Protocol (PDP) contexts. The step of opening a tunnel may require the mobile device 100 to indicate the domain, or network entry point 305 that it wishes the tunnel opened with. In this example, the tunnel first reaches the network router 315, the network router 315 then uses the name server 310 to determine which network entry point 305 matches the domain provided. Multiple tunnels can be opened from one mobile 100 for redundancy or to access different gateways and services on the network. Once this domain name is found, the tunnel is then extended to the network entry point 305 and the necessary resources are allocated at each of the nodes along the way. The network entry point 305 then uses an address assignment component, i.e. like DHCP 335 to allocate an IP address for the mobile device 100. Having allocated an IP address to the device 100 and communicated this information to the gateway 140, information, such as the stored data items, can then be sent from the store-and-forward gateway 140 to the mobile device 100 via the wireless network tunnel 325. In addition, as data items are received from the host system, these data items can be addressed with the IP address now associated with the mobile and immediately sent to the mobile without undue delay, thereby allowing a seamless and continous pushing of the data items from the host to the mobile as they arrive temporarily at the store and forward gateway. The presence of the wireless tunnel provides the redirector program with a continuous, uninterrupted secure communication link between the host system, located behind the corporate firewall, and the mobile device 100. Through this secure communication link the redirector program delivers secure, encrypted messages that cannot be viewed by any intermediate component or node, only the mobile device user.

The wireless network tunnel 325 typically has a very limited life, depending on the mobile's 100 coverage profile and activity. The wireless network 145 will tear down the tunnel 325 after a certain period of inactivity or out-of-coverage period, in order to recapture the resources held by this tunnel 325 for other users. The main reason for this is to reclaim the IP address temporarily reserved for that mobile device 100 when the tunnel 325 was first opened. Once the IP address is lost, i.e. re-assigned to another mobile device 100 and the tunnel is broken down, the store and forward gateway 140 then loses all ability to initiate IP data packets to the device, either over TCP or over UDP. If the mobile device 100 has been out of coverage for some time, and has nothing to send to the store-and-forward gateway 145, then the mobile devices may not be informed that the tunnel 325 has been lost. This can occur when the network idle timer expires and the mobile device 100 is out of coverage and cannot receive the notification that that tunnel has been closed. Therefore the mobile device 100 cannot request a new tunnel to get a new IP address to give to the store-and-forward gateway 145. If data arrives sometime later for the mobile device one aspect of the present invention solves this problem. Specifically when an IP address is unassigned the DHCP server is utilized and the DHCP monitor by the store-and-forward gateway will also be informed. Then when data arrives an SMS message is sent to the mobile device 100 requesting the tunnel be reopened.

In some wireless networks 145 it is possible that the gateway 140 itself implements the DHCP server 335, or whatever address assignment method is used, that is accessed by the network entry point 305. In this configuration, the store-and-forward gateway 140 is able to know when a mobile device 100 loses its IP address, which will ensure that data is not pushed to an 'invalid' IP address by the gateway. Without an integral address assignment mechanism, however, the store-and-forward gateway 140 may have to implement a timeout mechanism (or some other form of mechanism) to indicate when an IP-to-mobile address mapping has become stale and could be invalid. This timeout mechanism could be configurable, and set to match a network timeout value for inactivity or out-of-coverage tunnel breakdown.

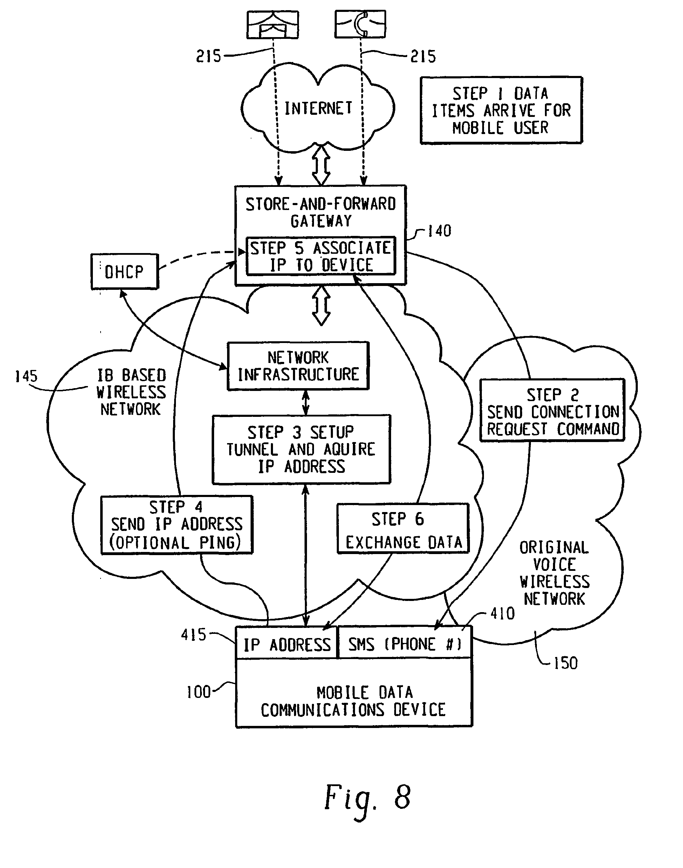

FIG. 8 sets forth the preferred steps for redirecting data items over the IP based wireless network 145. This drawing also shows an optional voice network 150, which can be used to communicate commands to the mobile device 100 when the device is a dual-mode device, and it does not currently have a valid IP address. Preferably, this method is also used when the device has a valid IP address, but this IP address is not known by the store-and-forward gateway for whatever reason. In this illustration, there are two additional components shown within the mobile device 100, an IP Address 415 and an SMS Phone Number 410. A data network, like GPRS, will often operate alongside cellular telephone network, like GSM, which carries the digital or analog voice traffic. This voice network 150 may also provide a data channel with limited bandwidth, such as the Short Messaging Service (SMS). The packets on these data channels are usually limited in size (*e.g*., 160 octets on GSM/SMS) and the channels are mainly intended to be used to transport control information from the network infrastructure to mobile devices. In particular, they are not intended to be used for general data communication, and hence cannot be used to handle data traffic that would normally be exchanged over the data network component of the system. Such control channels, however, are useful in that they provide the mobile device 100 with a permanent address, i.e., the device phone number. As such, these control channels can be effectively used to contact the mobile device 100 and push a small amount of command and control information to the device. According to the present invention, this information may include a connection request command indicating that data for the mobile device 100 has been received at the store-and-forward gateway 140. Preferably, to use this SMS channel the mobile device 100 will send its SMS Number and PIN value at startup. Preferably, the store and forward gateway builds and maintains a table store that links a SMS Number to a PIN value so that SMS messages can be sent to the mobile device as needed.

In step 1 of FIG. 8, redirected data items 215 from one or more redirector programs 12 are received at the store-and-forward gateway 140. As these data items 250 arrive at the store-and-forward gateway 140, they are associated to particular mobile devices 100 based on the address information that was added during the repackaging step by the redirector program 12. As described earlier a permanent identifier number associated with the mobile device 100 is added to the outer envelop of the repackaged data items 205. These data items 205 are temporarily stored at the gateway 140. The gateway 140 then attempts to verify that it has a current valid IP address for the particular mobile device 100. It can run an inactivity timer that matches the wireless network's 145 inactivity timer for tearing down tunnels, and clear the IP address for that mobile when the timer expires. Otherwise, it can implement an address assignment server 335 and monitor when IP addresses are revoked and assigned to mobiles. Following the two described IP tracking methods, the gateway 140 determines if it does have a valid IP address. If a valid address does exist, then the gateway 140 will attempt to bypass steps 2-5 in FIG. 8 and proceed directly to step 6 directly, which is to send the stored data immediately to the mobile device 100.

If the validity of the mobile device's 100 IP address is in question, or if there is no mapping of the particular mobile (*i.e*., there has never been a packet sent to the device, or if the DHCP has indicated that the IP address was revoked), then the gateway 140 performs the additional steps 2-5.

In step 2, the gateway 140 sends a connection request command over the voice network control channel to the mobile device's 100 voice address, in this case shown as an SMS phone number 410. In some networks, like GPRS, it is also possible to send the connection request command over an SMS channel (or some other control channel) of the data network. In this case, the SMS phone number is also used but it does not interfere with the voice component of the device. This connection request command could be implemented in many ways. In one embodiment, the connection request command could be a PING command. For single-mode devices that only communicate over the wireless packet network 145, the connection request command could be sent over a low-bandwidth control channel of the packet network 145.

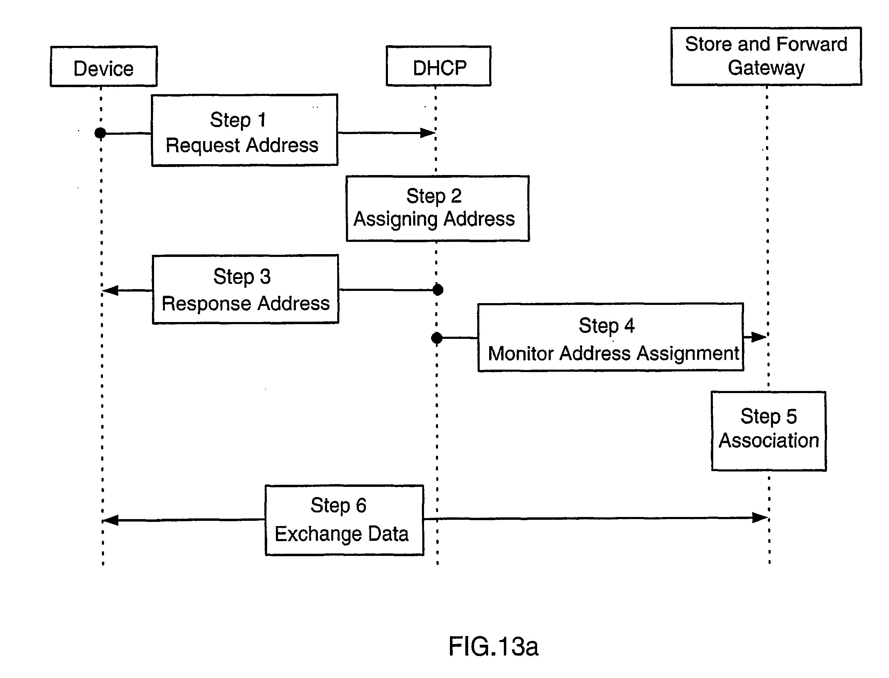

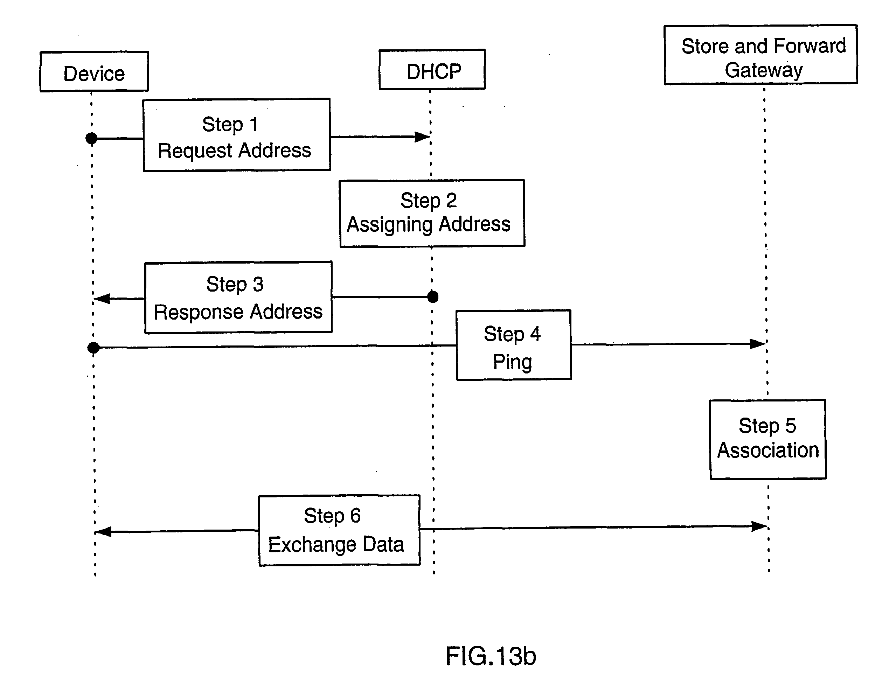

There are two responses to step 2. At this point, in addition to FIG. 8 reference may also be made to FIGS. 13a and b to further illustrate the two responses. FIGS. 13a and 13b are sequence diagrams illustrating actions taken at the mobile, DHCP and store and forward gateway after a connection request command is made to the mobile. FIG. 13a is applicable if the store and forward gateway can directly detect an assignment of a network address by the DHCP while FIG. 13b is applicable if the store and forward gateway cannot directly detect the assignment. Preferably, the mobile device 100 knows which of the two responses to execute because the gateway 140 instructs the mobile in the connection request command sent in step 2. Alternatively, the mobile knows which of the two responses to execute based on the operator of the wireless network (i.e., the operator may program each device at initialization). If the store-and-forward gateway 140 includes a DHCP server 335, has control over the data channel to the DHCP server 335, or has some capability to directly detect the assignment of a network address by the DHCP server 335, then the mobile simply needs to perform step 3 and can skip step 4. In step 3, the mobile device transmits a network address request to the network 145, which then allocates a network address to the mobile device 100. In this situation, the store-and-forward gateway 140 will be automatically aware of the new IP address assignment after step 3 has taken place and will immediately perform steps 5 and 6, which results in the data arriving to the mobile. If the gateway has no control over the DHCP server 335 or detection capabilities of assignments by the DHCP server, however, then the mobile device 100 performs step 3 followed by step 4, which causes the newly acquired network address to be sent back to the store-and-forward gateway 140. In this example the network address is shown as an IP address, as it is assumed the mobile device 100 is operating on a IP based wireless network. Other forms of packet addressing, however, could be used with this invention.

Alternatively, the mobile device 100 could be configured to periodically execute step 3 in order to acquire an IP address, without first receiving the connection request command in step 2. In this situation, step 2 could be omitted. This automatic sending of the IP address at a configured interval is seen as less efficient, however, as the user may have to wait for several minutes for information that is waiting to be delivered to their mobile device 100. Normally, the configured interval will be loaded into the mobile device as part of its initial configuration, although it could be updated over-the-air using a secure device updating protocol.

When step 4 is complete, the store-and-forward gateway 140 will be provided with enough information to map a mobile device 100 to an IP address. This mapping, shown as step 5, is a necessary step for building, addressing and sending an IP packet to the mobile device 100. The initial versions of most IP based wireless networks 145, like the GPRS network, do not allow a gateway 140 to initiate a data link (PDP context) to the mobile device 100. One of the main reasons for this limitation is because most networks continue to focus on IPv4 (Internet Protocol version 4), which is the original IP definition used within the Internet. This has resulted in a very limited address space and the inability to assign each mobile device 100 with a fixed IP address. Therefore, wireless network operators have allocated only a small number of 'real IP addresses' and use a dynamic address assignment as a preferred strategy. Mobile devices 100 must therefore have an alternate permanent identifier, and servers must maintain a dynamic link between that permanent identifier of the mobile devicde and the temporary IP address of the mobile device.

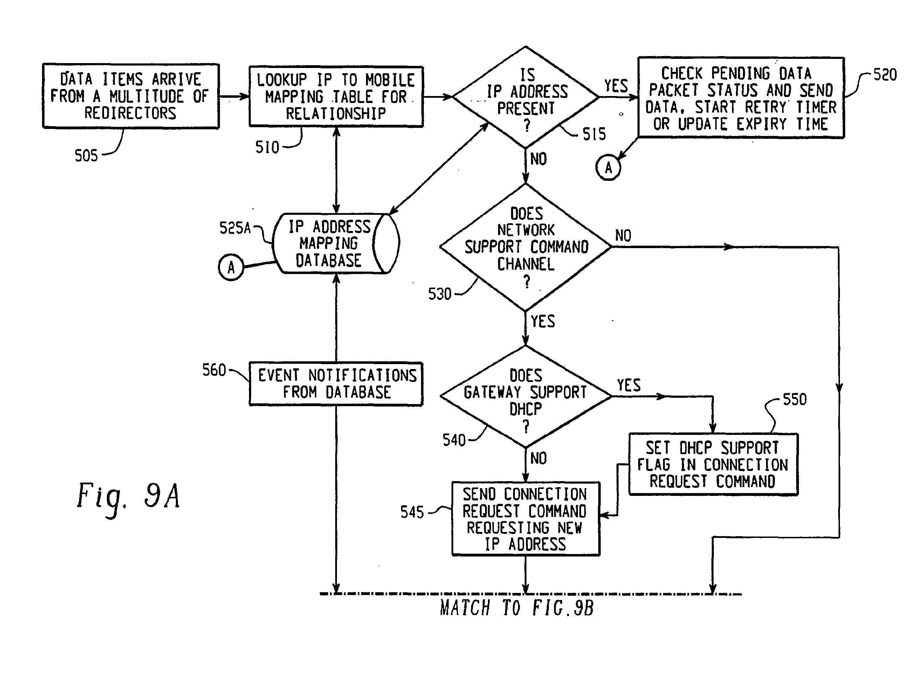

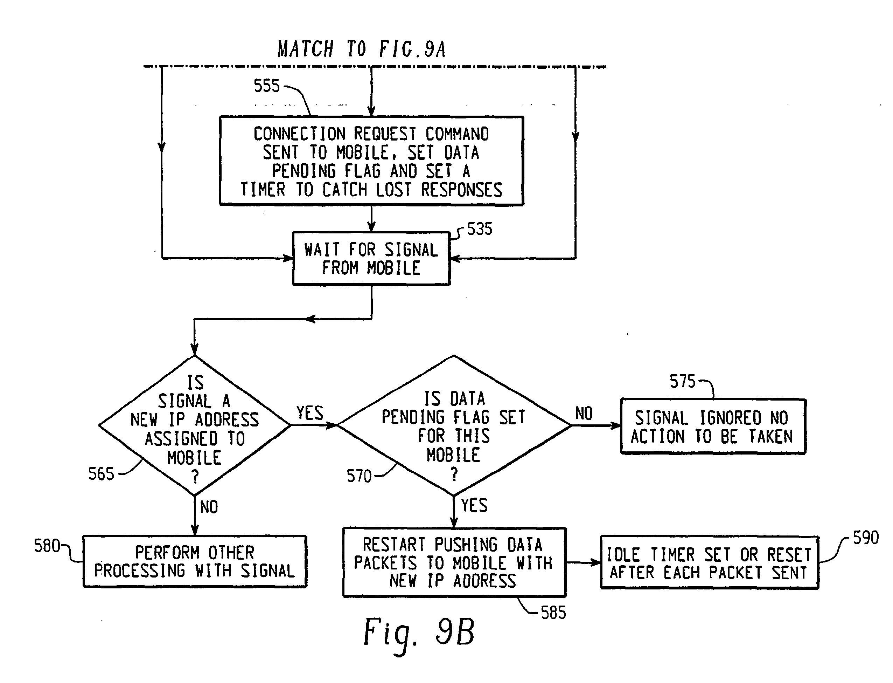

After the association of mobile device 100 to IP address is completed, step 6 can be performed. In this final step, the store-and-forward gateway 140 sends an IP Packet (either TCP or UDP packet) via the network tunnel to the same mobile device 100 that established the tunnel 325. With the current IP address available to the gateway 140, each data packet can be addressed correctly and sent to the device 100 until the inactivity or out-of-coverage timer expires and the entire IP address reacquiring sequence is performed again. FIGs. 9A and 9B provide a detailed algorithm to describe these steps programmatically.

FIG. 9A is a data flow diagram that depicts how a store-and-forward gateway 140 handles incoming data from redirector programs going to mobile devices. Beginning at step 505, data items (215) from a multitude of redirector programs 12 arrive at the gateway 140. Each time a data item 215 arrives at the gateway 140, the gateway 140 performs a lookup to determine the IP address to mobile device mapping relationship 510. The data item 205 provides information about the destination mobile to enable this lookup, as part of the packaging technique described above. This interaction takes place with a database that holds the IP address to mobile address mapping 525A. For one skilled in the art, this database could be a cache mechanism within RAM. This mapping database 525A could be an Oracle^{™} database, a Sybase^{™} database, or some form of LDAP database. This database is labeled (A). Once the database mapping information is retrieved, the gateway 140 determines, in step 515, if an IP address is present in the database for the particular mobile device. If there is an address present, then the data item can be immediately sent to the mobile device 100 in step 520. In this step 520, the gateway 140 also starts a retry timer in case the data item does not arrive at the mobile device 100 in a specified time period, in which event it is retransmitted from the gateway 140. If the mobile cannot receive the data item after multiple retries, as indicated by the lack of receive acknowledgements, then an expired time value is placed in the mobile's record within the database 525 to indicate that the IP address has gone stale and should not be used.

If there is no IP address for the particular mobile in the database 525A, or if the address has expired, then the gateway 140 determines whether the mobile supports a control channel, such as a connection over a parallel voice network, or a low bandwidth (i.e. supporting only very small data messages) control channel on the data network. If a command channel is not supported, then the gateway 140 must wait for a spontaneous address request message from the mobile device 100 in step 535. If the network does support command messages, however, then the gateway 140 determines if it has implemented a DHCP server in step 540. If the gateway has implemented a DHCP server, then a flag is set to indicate this support within the command message in step 550. In this instance, the command message is a connection request command. Then, in step 545, the connection request command is sent to the mobile, with or without the DHCP supported flag set. A timer is also set to indicate that data is pending for this mobile, and a timer is set to catch any situations where the response is missed 555.

At this point, the gateway 140 is waiting for a message from the mobile device 100, or from the DHCP server 335. As shown in FIG. 9B, a signal from the mobile device 100, or the DHCP server 335 will be mitten to the IP Address mapping storage area 525. When this happens, the database 525 will notify the gateway in step 560 using traditional callback methods. This callback notification of an event 560 will cause the gateway 140 to check whether a new IP address has been assigned to this mobile device 100 at step 565. If the signal from the mobile indicates that a new IP address has been assigned, then control passes to step 570, which determines if the data pending flag is set for this particular mobile device. If there is no data pending, then the signal is ignored 575. If, however, there is data pending for the mobile device 100, then at step 585 the gateway starts to push TCP or UDP data packets over IP to the mobile device using the new IP address assigned. After each data packet is sent, the idle timer is set or reset for this mobile device 100 to help ensure the IP address is kept current and is valid.

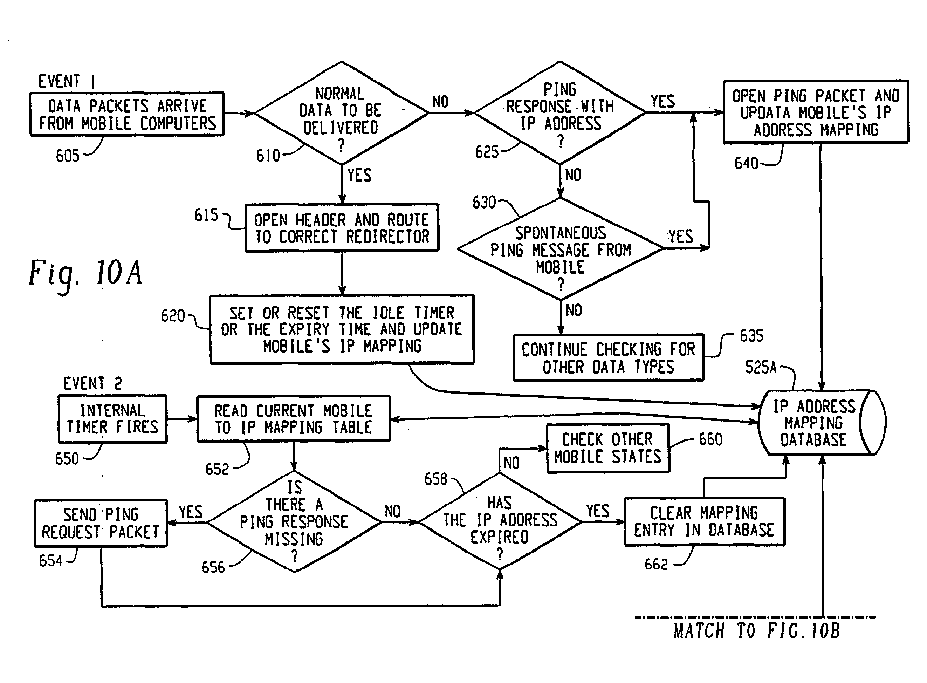

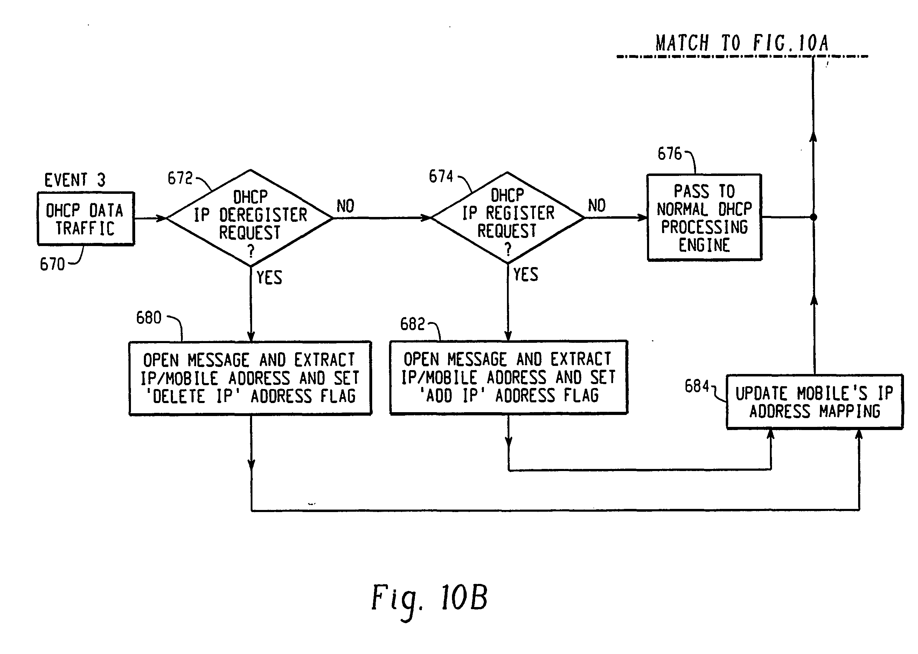

FIG. 10 is a continuation of FIG. 9, and is a data flow diagram of how a mobile address to IP address mapping database 525A is updated with external and internal events. Beginning at step 605 in FIG. 10A, data packets arrive at the gateway 140 from the mobile devices 100. These packets are checked to see if they are normal data messages or control messages in step 610. If the packet is a normal data packet, then the header of the packet is opened at step 615, and the gateway 140 routes the data to the correct redirector 12. The idle timer is also set or reset for this mobile device to ensure that the IP address is kept current and valid at step 620. Additionally, the IP mapping database 525A is updated in case the IP address for this mobile changed and an expiry timer is set for the mobile to indicate when the IP address might go stale.

If the packet is not a normal data packet, however, then the gateway 140 determines, in step 625, if it is a response control packet from the mobile device, such as a PING response control packet 640 to the connection request command sent in FIG. 9. As indicated previously, this connection request command could be a PING command message. If it is not a PING response packet, then the gateway 140 determines if the packet is a spontaneous update packet at step 630. This spontaneous update packet (or spontaneous address request packet) may be used by the mobile to obtain a valid IP address if the wireless network 145 does not support a command channel. In either case, the packet is opened and the new IP address is used to update the mobile to IP address mapping 640 within the address mapping database 525A. If the message from the mobile device 100 is not one of these two control data types, then further checks may be performed at step 635.

The second type of events that can affect the mapping database 525A are internal timer events. The gateway 140 includes several timers that are set and reset for tracking mobile device 100 states. When one of these timers expires at step 650 it must be checked. Another method to perform this would be to keep an expiry time within the table entry for this device, shown in several parts within FIGs. 9 and 10. This expiry timer would be read each time a packet is to be sent to the device to see if the IP address had gone stale. Each time a packet is sent or received from the device, the expiry time is updated to reflect the new activity. In this example, if a timer expires the gateway 140 will check the mobile's database entry to determine the state of the mobile device in step 652. If there has been no response to a PING request packet (*i.e*., a connection request command) at step 656, then the gateway will send another PING packet to the mobile device 654. Once this is done, or if there has been no missed PING responses, the gateway 140 determines if the IP address has expired at step 658. If the address has not expired, then other timer related checks are performed at step 660. If the IP address has expired, however, then the gateway 140 will clear the IP address value from the database entry for this mobile device at step 662 to ensure it cannot be used later.

The third type of event that can effect the mobile IP address mapping database 525A is external DHCP requests (step 670). The first check on these events is to see if a DHCP IP de-register is being requested at step 672. If it is, then a flag is set to indicate that the mapping entry for this mobile should be cleared at step 680. If it is not this type of DHCP request, then the gateway 140 determines if it is a DHCP IP register request at step 674. If it is, then a flag is set to indicate that the IP address should be set for this mobile at step 682. If the DHCP request is neither of these two, however, then it is passed to the normal DHCP processing logic at step 676. If the mobile's IP address mapping must be modified, then the IP address mapping database 525A is updated at step 684. This will either cause the mapping to be cleared (step 680) or to be set (step 682), which in turn will cause a database event notification to occur. Once this update is complete the normal DHCP processing is completed with the requests 684.

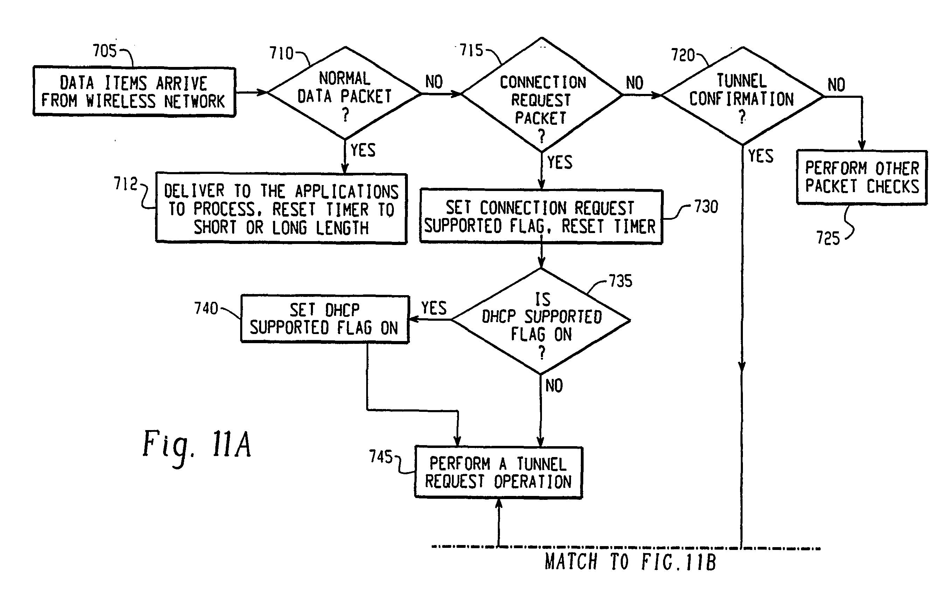

FIG. 11A is a data flow diagram of the mobile devices' logic for communicating with the store-and-forward gateway 140. At step 705, data items arrive in from the wireless network, either from the IP based wireless network 145, or the voice wireless network 150. If the data item is a data packet 710 from the IP based wireless network 145, then it will be delivered to higher-level applications for processing and possibly presentation to the user. Whenever data is received, a poll timer is reset to indicate that the current IP address is valid. Otherwise, the mobile determines if the data item is a connection request command at step 715. If the data item is not a connection request command, then at step 720 the mobile determines if the data item is a tunnel confirmation packet. The tunnel confirmation packet is transmitted from the wireless data network 145 to the mobile device after a wireless network tunnel 325 has been established. If it is not a tunnel confirmation packet, then the mobile may perform other checks at step 725, depending on the other features of the mobile device.

If the packet is a connection request command as determined at step 715, then a flag is set at step 730 to indicate that the gateway 140 is able to support connection requests on the current wireless network 145 and/or 150. At step 735, an additional check of the packet is performed to see if the gateway 140 also supports DHCP. If so, then a flag is set 740 to indicate that after the tunnel confirmation packet is received, there is no need to forward the new IP address to the gateway 140, as it automatically receives this information when the tunnel is created.

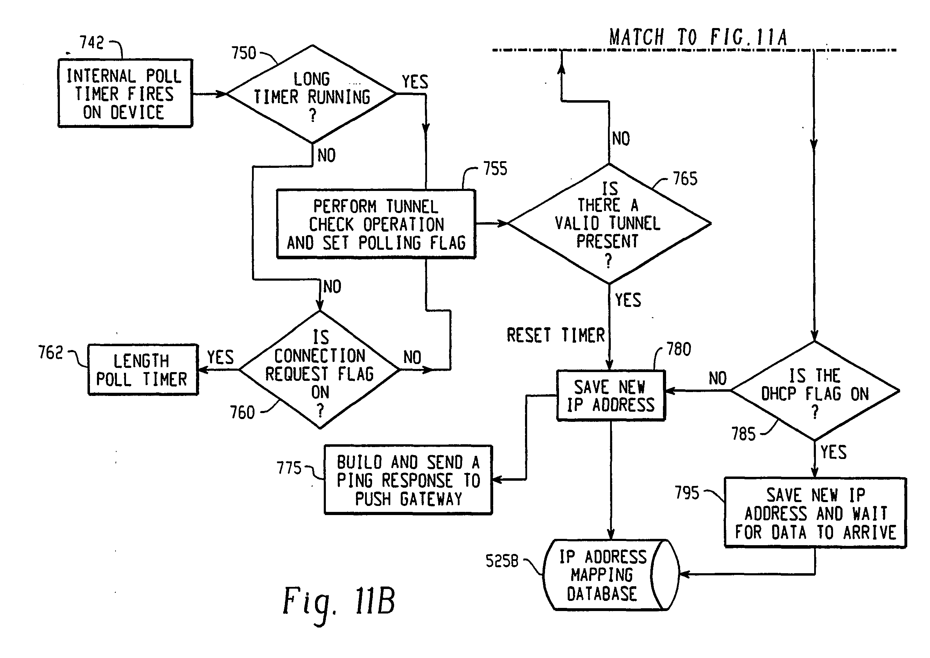

Whether or not the gateway 140 supports DHCP, a tunnel request (or address request) is made by the mobile device 100 to request a new tunnel and a new IP address at step 745. If the packet received is a tunnel conformation message at step 720, then the flow diagram proceeds to FIG. 11B.

In FIG. 11B the gateway first determines if the DHCP flag is turned on at step 785. If it is, then the new IP address is saved 795 in the IP address mapping database 525B. This address mapping database 525B is a smaller version of the host address mapping database 525A, which contains all mobile devices and their current states. If there is no DHCP support, then the new IP address is saved at step 780, and the mobile sends an address request response message to the gateway 140 to inform it of the new IP address for data exchange at step 775.

When the mobile device 100 first starts it is necessary to run a poll timer just in case the gateway 140 is unable to send connection request packets. Whenever the poll timer expires 742, the software in the mobile determines if a long or a short timer is running 750. The long timer is used as a fail-safe mechanism to ensure the gateway 140 never gets confused about the state of the device. The long timer is used primarily when connection requests are supported. The long timer could be hours or days long and when it expires causes a tunnel check operation to be executed 755. If a short poll timer is running, the mobile determiners if a connection request has ever been received by checking the connection request flag 760. If a connection request was received, then the flag is turned on, which will cause the poll timer to be lengthened to the long timeout value. Otherwise, the mobile will perform a tunnel checking operation, which would involve sending an IP packet to itself or to the gateway, on what should be a valid tunnel 755. The IP based wireless network 145 will return an error if the device 100 does not have a valid tunnel established with the gateway 140. If the tunnel 765 is invalid or not present, the mobile device 100 performs a tunnel request operation 745 to the network to acquire a new tunnel and a new IP address. If the tunnel is valid, then the current IP address is saved and immediately sent to the gateway 140 via a connection response message.

Having described in detail the preferred embodiments of the present invention, including the preferred methods of operation, it is to be understood that this operation could be carried out with different elements and steps. This preferred embodiment is presented only by way of example and is not meant to limit the scope of the present invention, which is defined by the following claims.

## Claims

1. A method of redirecting data from a messaging server (120) to a mobile device (100) that is capable of communication over a wireless packet data network (145) and a wireless voice network (150), the method comprising the steps of:
receiving data from a plurality of sources at the messaging server (120) and
redirecting the received data to the wireless packet data network (145);
receiving the redirected data at a store-and-forward server (140) associated with the wireless packet data network (145);
determining whether a valid wireless network address is associated with the mobile device (100);
if a valid wireless network address is associated with the mobile device (100), then:
(a) addressing the redirected data using the valid wireless network address; and
(b) transmitting the redirected data to the mobile device (100) via the wireless packet data network (145); and
if a valid wireless network address is not associated with the mobile device (100), then:
(a) transmitting a connection request command to the mobile device (100) via the wireless voice network (150);
(b) the mobile device (100) transmitting an address request to the wireless packet data network (145) and obtaining a valid wireless network address;
(c) providing the valid wireless network address to the store-and-forward server (140);
(d) addressing the redirected data using the valid wireless network address; and
(e) transmitting the redirected data to the mobile device (100) via the wireless packet data network (145).

2. The method of claim 1, further comprising the steps of:
receiving data at the messaging server (120), wherein the data is addressed to a plurality of users, each user having an associated mobile device (100);
redirecting the data to the wireless packet data network (145) and receiving the redirected data at the store-and-forward server (140);
associating the redirected data to one of the users' mobile devices (100) using addressing information embedded within the redirected data; and
storing the redirected data in a database coupled to the store-and-forward server (140), wherein the database includes a plurality of sub-stores for each of the plurality of users for storing the users' redirected data.

3. The method of claim 2, further comprising the step of:
providing an Internet Protocol (IP) based network as the wireless packet data network (145); and
providing an IP address as the addressing information embedded within the redirected data.

4. The method of claim 2, further comprising the step of:
providing an E-mail address as the addressing information embedded within the redirected data.

5. The method of claim 3, further comprising the step of:
providing the General Packet Radio Service (GPRS) network as the IP based network.

6. The method of claim 1, wherein the determining step further comprises the steps of:
receiving a valid network address for the mobile device (100) at the store-and-forward server (140);
setting an inactivity timer for the mobile device (100) when the valid network address is received at the store-and-forward server (140);
if the inactivity timer expires, then setting a flag indicating that the network address is invalid.

7. The method of claim 1, wherein the determining step further comprises the steps of:
the store-and-forward server (140) contacting an address assignment component (335) of the wireless packet data network (145);
receiving information from the address assignment component (335) as to whether the wireless network address for the mobile device (100) is valid.

8. The method of claim 7, further comprising the step of:
providing a DHCP server as the address assignment component (335) of the wireless packet data network (145).

9. The method of claim 7, further comprising the step of:
integrating the address assignment component into the store-and-forward server (140).

10. The method of claim 1, wherein the determining step further comprises the steps of:
providing an address assignment component at the store-and-forward server (140);
receiving network addressing information at the address assignment component (335) and associating this addressing information with a mobile device (100); and
the address assignment component (335) providing this addressing information to the store-and-forward server (140).

11. The method of claim 1, further comprising the step of:
providing information in the connection request command as to whether the store-and-forward server (140) includes an address assignment component (335).

12. The method of claim 11, further comprising the step of:
if the store-and-forward server (140) does not include an address assignment component (335), then the mobile device (100) transmitting the valid network address to the store-and-forward server (140).

13. The method of claim 11, further comprising the step of:
if the store-and-forward server (140) does include an address assignment component (335), then the address assignment component (335) detecting the valid network address obtained from the wireless packet data network (145) and providing the valid network address to the store-and-forward server (140).

14. The method of claim 1, further comprising the step of:
providing a PING command as the connection request command.

15. The method of claim 1, further comprising the steps of:
configuring the mobile device (100) to periodically transmit an address request to the wireless packet data network (145) in order to obtain a valid wireless network address; and
providing the valid wireless network address to the store-and-forward server (140).

16. The method of claim 1, further comprising the step of:
providing an address mapping database at the store-and-forward server (140), wherein the address mapping database associates a plurality of wireless network addresses with a plurality of mobile devices (100).

17. The method of claim 1, wherein the connection request command is transmitted via a data channel of the wireless voice network (150).

18. The method of claim 17, wherein the data channel is an SMS channel.

19. The method of claim 1, further comprising the step of:
providing the GSM network as the wireless voice network (150) and the GPRS network as the wireless packet data network (145).

20. The method of claim 1, further comprising the steps of:
determining whether the mobile device (100) is connected to the messaging server (120); and
if the mobile device (100) is connected to the messaging server (120), then disabling the redirecting of the received data to the wireless packet data network (145) until the mobile device (100) is no longer connected to the messaging server (120).

21. The method of claim 20, further comprising the step of:
providing an interface cradle (110) for directly connecting the mobile device (100) to the messaging server (120).

22. The method of claim 21, further comprising the step of:
coupling the mobile device (100) to the interface cradle (110) via a short range RF link.

23. The method of claim 1, further comprising the step of:
providing a desktop system as the messaging server (120), wherein the desktop system is associated with a user of the mobile device (100).

24. The method of claim 1, further comprising the step of:
providing a network server as the messaging server (120), wherein the network server is associated with a plurality of users operating a plurality of mobile devices (100).

25. The method of claim 1, wherein the redirected data includes E-mail messages.

26. The method of claim 1, wherein the redirected data includes digitized voice messages.

27. The method of claim 1, wherein the redirected data includes E-mail messages and digitized voice messages.

28. A system for transmitting data to a mobile device (100), comprising:
a messaging server (120) having a redirector application (12) for receiving data from a plurality of sources and for redirecting the received data to an external network;
a wireless packet data network (145) coupled to the external network, the wireless packet data network (145) having a store-and-forward server (140) for receiving redirected data from the messaging server and for transmitting the redirected data to the mobile device (100); and
a wireless voice network (150) operating in conjunction with the wireless packet data network (145), wherein the mobile device (100) is capable of communication over both the wireless packet data network (145) and the wireless voice network (150);
wherein the store-and-forward server (140) determines whether the mobile device (100) is associated with a valid network address , and if it is not then the store-and-forward server (140) transmits a connection request command to the mobile device (100) via the wireless voice network (150) instructing it to obtain a valid network address from the wireless packet data network (145), whereupon the valid network address is provided to the store-and - forward server (140) and the store-and-forward server (140) addresses the redirected data using the valid wireless network address for transmission to the mobile device (100) via the wireless packet data network (145).

29. The system of claim 28, wherein the wireless packet data network (145) is an Internet Protocol (IP) based network.

30. The system of claim 29, wherein the IP based network is the GPRS network.

31. The system of claim 30, wherein the wireless voice network (150) is the GSM network.

32. The system of claim 28, further comprising: a local area network (LAN) coupling the messaging server (120) to the plurality of sources.

33. The system of claim 32, wherein the messaging server (120) is a desktop computer system associated with the user of the mobile device (100).

34. The system of claim 32, wherein the messaging server (120) is a network server associated with a plurality of users operating a plurality of mobile devices (100).

35. The system of claim 28, further comprising: a firewall system (160) coupled between the messaging server (120) and the external network.

36. The system of claim 28, wherein the external network is the Internet.

37. The system of claim 28, further comprising: an interface cradle (110) for coupling the mobile device to the messaging server (120).

38. The system of claim 37, wherein the mobile device (100) makes a direct electrical connection to the interface cradle (110).

39. The system of claim 37, wherein the mobile device (100) makes a wireless connection to the interface cradle (110).

40. The system of claim 37, wherein the messaging server (120) detects whether the mobile device (100) is coupled to the interface cradle (110), and if so, the messaging server (120) disables redirection of the data.

41. The system of claim 28, wherein the parallel wireless voice network (150) includes an SMS data channel for transmitting the connection request command to the mobile device (100).

42. The system of claim 28, wherein the connection request command is a PING command.

43. The system of claim 28, wherein the connection request command includes information indicating whether the store-and-forward server (140) includes an address assignment component (335).

44. The system of claim 28, wherein the messaging server (120) is Microsoft Exchange Server.

45. The system of claim 28, wherein the store-and-forward server (140) includes an integrated address assignment component (335).

46. The system of claim 45, wherein the integrated address assignment component (335) is a DHCP server.

47. The system of claim 28, further comprising:
an address assignment component (335) associated with the wireless packet data network (145) and coupled to the store-and-forward server (140).

48. The system of claim 28, wherein the wireless packet data network (145) includes:
one or more network entry points (305), wherein the store-and-forward server (140) is coupled to at least one of the one or more network entry points (305);
a plurality of network routers (315); and
a name server (310).

49. The system of claim 28, wherein the wireless packet data network (145) creates a wireless network tunnel (325) through the one or more network entry points (305) and the plurality of network routers (315) in order to transmit data to the mobile device (100).

50. The system of claim 49, wherein the wireless network tunnel (325) transports TCP data packets.

51. The system of claim 49, wherein the wireless network tunnel (325) transports UDP data packets.

52. The system of claim 49, wherein the mobile device (100) is configured to transmit an address request to the wireless packet data network (145) upon receiving the connection request command from the store-and-forward server (140).

53. The system of claim 52, wherein the wireless packet data network (145) dynamically assigns a valid network address to the mobile device (100) in response to the address request.

54. The system of claim 53, wherein the valid network address is provided to the store-and-forward server (140).

55. The system of claim 54, wherein the mobile device (100) transmits the valid network address directly to the store-and-forward server (140).

56. The system of claim 54, wherein the valid network address is provided to the store-and-forward server (140) by an address assignment component coupled to the wireless packet data network (145) and integrated into the store-and-forward server (140).

57. The system of claim 28, further comprising: an address mapping database for storing a table of mobile devices (100) and associated network addresses.

58. The system of claim 28, wherein the mobile device (100) is a two-way paging computer.

59. The system of claim 28, wherein the mobile device (100) is a cellular telephone having data messaging capabilities.

60. The system of claim 28, wherein the mobile device (100) is a portable digital assistant.

61. The system of claim 28, wherein the data includes E-mail messages.

62. The system of claim 37, wherein the mobile device (100) is configured to communicate encryption/decryption information to the messaging server (120) when the mobile device (100) is coupled to the interface cradle (110).

63. The system of claim 28, further comprising:
an electronic alarm system in communication with the messaging server (120), wherein the electronic alarm system senses an alarm condition and
transmits data to the messaging server (120) to be redirected to the mobile device (100).

64. The system of claim 28, further comprising: a personal monitoring systems in communication with the messaging server (120), wherein the personal monitoring system monitors at least one vital sign of a human and transmits vital sign data to the messaging server (120) to be redirected to the mobile device (100).

65. The system of claim 28, further comprising: at least one of the plurality of sources selected from the group consisting of:
a motion detector, an Internet Web site, an E-mail message store, a PBX information exchange, or an information database.

66. The system of claim 28, wherein the received data is selected from the group consisting of digitized voice messages, E-mail messages, instant messages, corporate inventory records, corporate sales records, alarm information, vital sign information, or equipment monitoring information.

## Patentansprüche

1. Verfahren zum Umleiten von Daten von einem Meldungs-Server (120) an eine Mobilvorrichtung (100), welche zur Kommunikation über ein Drahtlos-Paketdaten-Netzwerk (145) und ein Drahtlos-Sprach-Netzwerk (150) in der Lage ist, wobei das Verfahren die Schritte enthält:
Empfangen von Daten von einer Mehrzahl von Quellen an dem Meldungs-Server (120) und Umleiten der empfangenen Daten an das Drahtlos-Paketdaten-Netzwerk (145);
Empfangen der umgeleiteten Daten an einem Speicher- und -Weiterleitungs-Server (140), welcher mit dem Drahtlos-Paketdaten-Netzwerk (145) in Zusammenhang steht;
Bestimmen, ob eine gültige Drahtlos-Netzwerk-Adresse mit der Mobilvorrichtung (100) in Zusammenhang steht;
wenn eine gültige Drahtlos-Netzwerk-Adresse mit der Mobilvorrichtung (100) in Zusammenhang steht, dann:
(a) Adressieren der umgeleiteten Daten unter Verwendung der gültigen Drahtlos-Netzwerk-Adresse; und
(b) Übertragen der umgeleiteten Daten an die Mobilvorrichtung (100) über das Drahtlos-Paketdaten-Netzwerk (145); und
wenn keine gültige Drahtlos-Netzwerk-Adresse mit der Mobilvorrichtung (100) in Zusammenhang steht, dann:
(a) Übertragen eines Verbindungs-Anforderungs-Befehls an die Mobilvorrichtung (100) über das Drahtlos-Sprach-Netzwerk (150);
(b) wobei die Mobilvorrichtung (100) eine Adress-Anforderung an das Drahtlos-Paketdaten-Netzwerk (145) überträgt und eine gültige Drahtlos-Netzwerk-Adresse erlangt;
(c) Bereitstellen der gültigen Drahtlos-Netzwerk-Adresse an den Speicher- und -Weiterleitungs-Server (140);
(d) Adressieren der umgeleiteten Daten unter Verwendung der gültigen Drahtlos-Netzwerk-Adresse; und
(e) Übertragen der umgeleiteten Daten an die Mobilvorrichtung (100) über das Drahtlos-Paketdaten-Netzwerk (145).

2. Verfahren nach Anspruch 1, welches ferner die Schritte enthält:
Empfangen von Daten an dem Meldungs-Server (120), wobei die Daten an eine Mehrzahl von Benutzern adressiert sind, wobei jeder Benutzer eine zugehörige Mobilvorrichtung (100) hat;
Umleiten der Daten an das Drahtlos-Paketdaten-Netzwerk (145) und Empfangen der umgeleiteten Daten an den Speicher- und -Weiterleitungs-Server (140);
Zuweisen der umgeleiteten Daten an eine der Benutzer-Mobilvorrichtungen (100) unter Verwendung von einer Adressierungs-Information, welche innerhalb der umgeleiteten Daten eingebettet ist; und
Speichern der umgeleiteten Daten in einer Datenbank, welche an den Speicherund -Weiterleitungs-Server (140) gekoppelt ist, wobei die Datenbank eine Mehrzahl von Teilspeichern für jeden von der Mehrzahl von Benutzern zum Speichern der umgeleiteten Daten des Benutzers enthält.

3. Verfahren nach Anspruch 2, welches ferner den Schritt enthält:
Bereitstellen eines Internet-Protokoll-(IP)-basierten Netzwerks als das Drahtlos-Paketdaten-Netzwerk (145); und
Bereitstellen von einer IP-Adresse als jene Adressierungs-Information, welche innerhalb der umgeleiteten Daten eingebettet ist.

4. Verfahren nach Anspruch 2, welches ferner den Schritt enthält:
Bereitstellen von einer E-Mail-Adresse als jene Adressierungs-Information, welche innerhalb der umgeleiteten Daten eingebettet ist.

5. Verfahren nach Anspruch 3, welches ferner den Schritt enthält:
Bereitstellen eines General Packet Radio Service (GPRS)-Netzwerks als das IP-basierte Netzwerk.

6. Verfahren nach Anspruch 1, bei welchem der Bestimmungsschritt ferner die Schritte enthält:
Empfangen von einer gültigen Netzwerkadresse für die Mobilvorrichtung (100) an dem Speicher- und -Weiterleitungs-Server (140);
Einstellen eines Inaktivitäts-Zeitnehmers für die Mobilvorrichtung (100), wenn die gültige Netzwerkadresse an dem Speicher- und -Weiterleitungs-Server (140) empfangen wird;
Einstellen, wenn der Inaktivitäts-Zeitnehmer abgelaufen ist, eines Kennzeichens, welches anzeigt, dass die Netzwerkadresse ungültig ist.

7. Verfahren nach Anspruch 1, bei welchem der Bestimmungsschritt ferner die Schritte enthält:
Kontaktieren des Speicher- und -Weiterleitungs-Server (140) von einem Adress-Zuweisungs-Bauteil (335) von dem Drahtlos-Paketdaten-Netzwerk (145);
Empfangen von einer Information von dem Adress-Zuweisungs-Bauteil (335) hinsichtlich dessen, ob die Drahtlos-Netzwerkadresse für die Mobilvorrichtung (100) gültig ist.

8. Verfahren nach Anspruch 7, welches ferner den Schritt enthält:
Bereitstellen eines DHCP-Servers als das Adress-Zuweisungs-Bauteil (335) von dem Drahtlos-Paketdaten-Netzwerk (145).

9. Verfahren nach Anspruch 7, welches ferner den Schritt enthält:
Integrieren des Adress-Zuweisungs-Bauteils in den Speicher- und - Weiterleitungs-Server (140).

10. Verfahren nach Anspruch 1, bei welchem der Bestimmungsschritt ferner die Schritte enthält:
Bereitstellen eines Adress-Zuweisungs-Bauteils an dem Speicher- und - Weiterleitungs-Server (140);
Empfangen von einer Netzwerk-Adressierungs-Information an dem Adress-Zuweisungs-Bauteil (335), und Zuweisen dieser Adressierungs-Information an eine Mobilvorrichtung (100); und
wobei das Adress-Zuweisungs-Bauteil (335) diese Adressierungs-Information dem Speicher- und -Weiterleitungs-Server (140) bereitstellt.

11. Verfahren nach Anspruch 1, welches ferner den Schritt enthält:
Bereitstellen von einer Information in dem Verbindungs-Anforderungs-Befehl hinsichtlich dessen, ob der Speicher- und -Weiterleitungs-Server (140) ein Adress-Zuweisungs-Bauteil (335) enthält.

12. Verfahren nach Anspruch 11, welches ferner den Schritt enthält:
wenn der Speicher- und -Weiterleitungs-Server (140) kein Adress-Zuweisungs-Bauteil (335) enthält, überträgt die Mobilvorrichtung (100) die gültige Netzwerkadresse an den Speicher- und -Weiterleitungs-Server (140).

13. Verfahren nach Anspruch 11, welches ferner den Schritt enthält:
wenn der Speicher- und -Weiterleitungs-Server (140) kein Adress-Zuweisungs-Bauteil (335) enthält, dann erfasst das Adress-Zuweisungs-Bauteil (335) die gültige Netzwerkadresse, welche von dem Drahtlos-Paketdaten-Netzwerk (145) erlangt ist, und stellt die gültige Netzwerkadresse dem Speicher- und - Weiterleitungs-Server (140) bereit.

14. Verfahren nach Anspruch 1, welches ferner den Schritt enthält:
Bereitstellen eines PING-Befehls als den Verbindungs-Anforderungs-Befehl.

15. Verfahren nach Anspruch 1, welches ferner die Schritte enthält:
Konfigurieren von der Mobilvorrichtung (100) derart, dass sie periodisch eine Adress-Anforderung an das Drahtlos-Paketdaten-Netzwerk (145) überträgt, um eine gültige Drahtlos-Netzwerkadresse zu erlangen; und
Bereitstellen der gültigen Drahtlos-Netzwerkadresse an dem Speicher- und - Weiterleitungs-Server (140).

16. Verfahren nach Anspruch 1, welches ferner den Schritt enthält:
Bereitstellen von einer Adress-Abbildungs-Datenbank an dem Speicher- und - Weiterleitungs-Server (140), wobei die Adress-Abbildungs-Datenbank eine Mehrzahl von Drahtlos-Netzwerk-Adressen einer Mehrzahl von Mobilvorrichtungen (100) zuweist.

17. Verfahren nach Anspruch 1, bei welchem der Verbindungs-Anforderungs-Befehl über einen Datenkanal von dem Drahtlos-Sprach-Netzwerk (150) übertragen wird.

18. Verfahren nach Anspruch 17, bei welchem der Datenkanal ein SMS-Kanal ist.

19. Verfahren nach Anspruch 1, welches ferner den Schritt enthält:
Bereitstellen des GSM-Netzwerks als das Drahtlos-Sprach-Netzwerk (150) und des GPRS-Netzwerks als das Drahtlos-Paketdaten-Netzwerk (145).

20. Verfahren nach Anspruch 1, welches ferner die Schritte enthält:
Bestimmen, ob die Mobilvorrichtung (100) mit dem Meldungs-Server (120) verbunden ist; und
wenn die Mobilvorrichtung (100) mit dem Meldungs-Server (120) verbunden ist, dann Deaktivieren der Umleitung von den empfangenen Daten an das Drahtlos-Paketdaten-Netzwerk (145), bis die Mobilvorrichtung (100) nicht länger mit dem Meldungs-Server (120) verbunden ist.

21. Verfahren nach Anspruch 20, welches ferner den Schritt enthält:
Bereitstellen von einer Schnittstellen-Basisstation (110) zum direkten Verbinden von der Mobilvorrichtung (100) mit dem Meldungs-Server (120).

22. Verfahren nach Anspruch 21, welches ferner den Schritt enthält:
Verbinden von der Mobilvorrichtung (100) mit der Schnittstellen-Basisstation (110) über eine Kurzbereichs-RF-Verbindung.

23. Verfahren nach Anspruch 1, welches ferner den Schritt enthält:
Bereitstellen eines Desktop-Systems als den Meldungs-Server (120), wobei das Desktop-System mit einem Benutzer von der Mobilvorrichtung (100) in Zusammenhang steht.

24. Verfahren nach Anspruch 1, welches ferner den Schritt enthält:
Bereitstellen eines Netzwerk-Servers als den Meldungs-Server (120), wobei der Netzwerk-Server mit einer Mehrzahl von Benutzern in Zusammenhang steht, welche eine Mehrzahl von Mobilvorrichtungen (100) betreiben.

25. Verfahren nach Anspruch 1, wobei die umgeleiteten Daten E-Mail-Meldungen enthalten.

26. Verfahren nach Anspruch 1, bei welchem die umgeleiteten Daten digitalisierte Sprachmeldungen enthalten.

27. Verfahren nach Anspruch 1, bei welchem die umgeleiteten Daten E-Mail-Meldungen und digitalisierte Sprachmeldungen enthalten.

28. System zum Übertragen von Daten an eine Mobilvorrichtung (100), welches enthält:
einen Meldungs-Server (120), welcher eine Umleitungs-Anwendung (12) zum Empfangen von Daten von einer Mehrzahl von Quellen und zum Umleiten der empfangenen Daten an ein externes Netzwerk hat;
ein Drahtlos-Paketdaten-Netzwerk (145), welches an das externe Netzwerk gekoppelt ist, wobei das Drahtlos-Paketdaten-Netzwerk (145) einen Speicherund -Weiterleitungs-Server (140) hat, um umgeleitete Daten von dem Meldungs-Server zu empfangen und um die umgeleiteten Daten an die Mobilvorrichtung (100) zu übertragen; und
ein Drahtlos-Sprach-Netzwerk (150), welches in Zusammenhang mit dem Drahtlos-Paketdaten-Netzwerk (145) arbeitet, wobei die Mobilvorrichtung (100) zur Kommunikation über sowohl das Drahtlos-Paketdaten-Netzwerk (145) als auch das Drahtlos-Sprach-Netzwerk (150) in der Lage ist;
wobei der Speicher- und -Weiterleitungs-Server (140) bestimmt, ob die Mobilvorrichtung (100) mit einer gültigen Netzwerkadresse in Zusammenhang steht, und, wenn dies nicht der Fall ist, der Speicher- und -Weiterleitungs-Server (140) dann einen Verbindungs-Anforderungs-Befehl an die Mobilvorrichtung (100) über das Drahtlos-Sprach-Netzwerk (150) überträgt, welcher jene instruiert, eine gültige Netzwerkadresse von dem Drahtlos-Paketdaten-Netzwerk (145) zu erlangen, woraufhin die gültige Netzwerkadresse dem Speicher- und -Weiterleitungs-Server (140) bereitgestellt wird, und der Speicher- und -Weiterleitungs-Server (140) die umgeleiteten Daten unter Verwendung von der gültigen Drahtlos-Netzwerk-Adresse zur Übertragung an die Mobilvorrichtung (100) über das Drahtlos-Paketdaten-Netzwerk (145) adressiert.

29. System nach Anspruch 28, bei welchem das Drahtlos-Paketdaten-Netzwerk (145) ein Internetprotokoll-(IP)-basiertes Netzwerk ist.

30. System nach Anspruch 29, bei welchem das IP-basierte Netzwerk ein GPRS-Netzwerk ist.

31. System nach Anspruch 30, bei welchem das Drahtlos-Sprach-Netzwerk (150) ein GSM-Netzwerk ist.

32. System nach Anspruch 28, welches ferner enthält: ein Lokalbereichs-Netzwerk (LAN), welches den Meldungs-Server (120) an die Mehrzahl von Quellen koppelt.

33. System nach Anspruch 32, bei welchem der Meldungs-Server (120) ein Desktop-Computer-System ist, welches mit dem Benutzer von der Mobilvorrichtung (100) in Zusammenhang steht.

34. System nach Anspruch 32, bei welchem der Meldungs-Server (120) ein Netzwerk-Server ist, welcher mit einer Mehrzahl von Benutzern in Zusammenhang steht, welche eine Mehrzahl von Mobilvorrichtungen (100) betreiben.

35. System nach Anspruch 28, welches ferner enthält: ein Firewall-System (160), welches zwischen dem Meldungs-Server (120) und dem externen Netzwerk gekoppelt ist.

36. System nach Anspruch 28, bei welchem das externe Netzwerk das Internet ist.

37. System nach Anspruch 28, welches ferner enthält: eine Schnittstellen-Basisstation (110) zum Koppeln von der Mobilvorrichtung an den Meldungs-Server (120).

38. System nach Anspruch 37, bei welchem die Mobilvorrichtung (100) eine direkte elektrische Verbindung mit der Schnittstellen-Basisstation (110) erstellt.

39. System nach Anspruch 37, bei welchem die Mobilvorrichtung (100) eine Drahtlos-Verbindung mit der Schnittstellen-Basisstation (110) erstellt.

40. System nach Anspruch 37, bei welchem der Meldungs-Server (120) erfasst, ob die Mobilvorrichtung (100) an die Schnittstellen-Basisstation (110) gekoppelt ist, und der Meldungs-Server (120), wenn dies der Fall ist, die Umleitung von den Daten deaktiviert.

41. System nach Anspruch 28, bei welchem das parallele Drahtlos-Sprach-Netzwerk (150) einen SMS-Datenkanal zum Übertragen des Verbindungs-Anforderungs-Befehls an die Mobilvorrichtung (100) enthält.

42. System nach Anspruch 28, bei welchem der Verbindungs-Anforderungs-Befehl ein PING-Befehl ist.

43. System nach Anspruch 28, bei welchem der Verbindungs-Anforderungs-Befehl eine Information enthält, welche anzeigt, ob der Speicher- und -Weiterleitungs-Server (140) ein Adress-Zuweisungs-Bauteil (335) enthält.

44. System nach Anspruch 28, bei welchem der Meldungs-Server (120) ein Microsoft Exchange-Server ist.

45. System nach Anspruch 28, bei welchem der Speicher- und -Weiterleitungs-Server (140) ein integriertes Adress-Zuweisungs-Bauteil (335) enthält.

46. System nach Anspruch 45, bei welchem das integrierte Adress-Zuweisungs-Bauteil (335) ein DHCP-Server ist.

47. System nach Anspruch 28, welches ferner enthält:
ein Adress-Zuweisungs-Bauteil (335), welches mit dem Drahtlos-Paketdaten-Netzwerk (145) in Zusammenhang steht, und mit dem Speicher- und - Weiterleitungs-Server (140) gekoppelt ist.

48. System nach Anspruch 28, bei welchem das Drahtlos-Paketdaten-Netzwerk (145) enthält:
einen oder mehrere Netzwerk-Eingangspunkte (305), wobei der Speicher- und - Weiterleitungs-Server (140) an zumindest einen von dem einen oder den mehreren Netzwerk-Eingangspunkten (305) gekoppelt ist;
eine Mehrzahl von Netzwerk-Routern (315); und
einen Benennungs-Server (310).

49. System nach Anspruch 28, bei welchem das Drahtlos-Paketdaten-Netzwerk (145) einen Drahtlos-Netzwerk-Tunnel (325) durch den einen oder die mehreren Netzwerk-Eingangspunkte (305) und die Mehrzahl von Netzwerk-Routern (315) erzeugt, um Daten an die Mobilvorrichtung (100) zu übertragen.

50. System nach Anspruch 49, bei welchem der Drahtlos-Netzwerk-Tunnel (325) TCP-Datenpakete überträgt.

51. System nach Anspruch 49, bei welchem der Drahtlos-Netzwerk-Tunnel (325) UDP-Datenpakete überträgt.

52. System nach Anspruch 49, bei welchem die Mobilvorrichtung (100) dazu konfiguriert ist, um eine Adress-Anforderung an das Drahtlos-Paketdaten-Netzwerk (145) nach einem Empfang von dem Verbindungs-Anforderungs-Befehl von dem Speicher- und -Weiterleitungs-Server (140) zu übertragen.

53. System nach Anspruch 52, bei welchem das Drahtlos-Paketdaten-Netzwerk (145) dynamisch eine gültige Netzwerkadresse an die Mobilvorrichtung (100) in Ansprechen auf die Adress-Anforderung zuweist.

54. System nach Anspruch 53, bei welchem die gültige Netzwerkadresse an den Speicher- und -Weiterleitungs-Server (140) bereitgestellt ist.

55. System nach Anspruch 54, bei welchem die Mobilvorrichtung (100) die gültige Netzwerkadresse direkt an den Speicher- und -Weiterleitungs-Server (140) überträgt.

56. System nach Anspruch 54, bei welchem die gültige Netzwerkadresse an den Speicher- und -Weiterleitungs-Server (140) durch ein Adress-Zuweisungs-Bauteil bereitgestellt ist, welches an das Drahtlos-Paketdaten-Netzwerk (145) gekoppelt ist und in den Speicher- und -Weiterleitungs-Server (140) integriert ist.

57. System nach Anspruch 28, welches ferner enthält: eine Adress-Zuweisungs-Datenbank zum Speichern von einer Tabelle von Mobilvorrichtungen (100) und zugehörigen Netzwerk-Adressen.

58. System nach Anspruch 28, bei welchem die Mobilvorrichtung (100) ein Zweiwege-Paging-Computer ist.

59. System nach Anspruch 28, bei welchem die Mobilvorrichtung (100) ein Mobiltelefon ist, welches Datenmeldungs-Fähigkeiten hat.

60. System nach Anspruch 28, bei welchem die Mobilvorrichtung (100) ein Portable Digital Assistent ist.

61. System nach Anspruch 28, bei welchem die Daten E-Mail-Meldungen enthalten.

62. System nach Anspruch 37, bei welchem die Mobilvorrichtung (100) dazu konfiguriert ist, um eine Verschlüsselungs-/Entschlüsselungs-Information an den Meldungs-Server (120) zu übertragen, wenn die Mobilvorrichtung (100) an die Schnittstellen-Basisstation (110) gekoppelt ist.

63. System nach Anspruch 28, welches ferner enthält:
ein elektronisches Alarmsystem in Verbindung mit dem Meldungs-Server (120),
wobei das elektronische Alarmsystem eine Alarmbedingung abtastet und Daten an den Meldungs-Server (120) zur Umleitung an die Mobilvorrichtung (100) überträgt.

64. System nach Anspruch 28, welches ferner enthält: ein persönliches Überwachungs-System in Verbindung mit dem Meldungs-Server (120), wobei das persönliche Überwachungs-System zumindest ein Lebenszeichen von einem Menschen überwacht und Lebenszeichen-Daten an den Meldungs-Server (120) zur Umleitung an die Mobilvorrichtung (100) überträgt.

65. System nach Anspruch 28, welches ferner enthält: zumindest eine von der Mehrzahl von Quellen, welche aus der Gruppe ausgewählt sind, welche enthält:
einen Bewegungserfasser, eine Internet-Website, einen E-Mail Meldungs-Speicher, eine PBX-Informationsvermittlung oder eine Informations-Datenbank.

66. System nach Anspruch 28, bei welchem die empfangenen Daten aus der Gruppe ausgewählt sind, welche digitalisierte Sprachmeldungen, E-Mail-Meldungen, Instant-Meldungen, Firmen-Bestandsmeldung-Aufzeichnungen, Firmen-Vertriebs-Aufzeichnungen, eine Alarminformation, eine Lebenszeichen-Information oder eine Equipment-Überwachungs-Information enthält.

## Revendications

1. Procédé pour rediriger des données depuis un serveur de messagerie (120) vers un dispositif mobile (100) qui est capable de communiquer sur un réseau sans fil à commutation de paquets (145) et un réseau téléphonique sans fil (150), le procédé comprenant les étapes consistant à :
recevoir des données provenant d'une pluralité de sources au niveau du serveur de messagerie (120), et rediriger les données reçues vers le réseau sans fil à commutation de paquets (145) ;
recevoir les données redirigées au niveau d'un serveur de stockage et
retransmission (140) associé au réseau sans fil à commutation de paquets (145) ;
déterminer si une adresse de réseau sans fil valide est associée au dispositif mobile (100) ;
si une adresse de réseau sans fil valide est associée au dispositif mobile (100), alors :
(a) adresser les données redirigées en utilisant l'adresse de réseau sans fil valide ; et
(b) transmettre les données redirigées au dispositif mobile (100) via le réseau sans fil à commutation de paquets (145) ; et
si une adresse de réseau sans fil valide n'est pas associée au dispositif mobile (100), alors :
(a) transmettre une commande de demande de connexion au dispositif mobile (100) via le réseau téléphonique sans fil (150) ;
(b) transmettre par le dispositif mobile (100) une demande d'adresse au réseau sans fil à commutation de paquets (145), et obtenant une adresse de réseau sans fil valide ;
(c) fournir l'adresse de réseau sans fil valide au serveur de stockage et retransmission (140) ;
(d) adresser les données redirigées en utilisant l'adresse de réseau sans fil valide ; et
(e) transmettre les données redirigées au dispositif mobile (100) via le réseau sans fil à commutation de paquets (145).

2. Procédé selon la revendication 1, comprenant en outre les étapes consistant à :
recevoir des données au niveau du serveur de messagerie (120), les données étant adressées à une pluralité d'utilisateurs, chaque utilisateur ayant un dispositif mobile associé (100) ;
rediriger les données vers le réseau sans fil à commutation de paquets (145), et recevoir les données redirigées au niveau du serveur de stockage et retransmission (140) ;
associer les données redirigées à un des dispositifs mobiles (100) des utilisateurs en utilisant des informations d'adressage intégrées dans les données redirigées ; et
stocker les données redirigées dans une base de données couplée au serveur de stockage et retransmission (140), la base de données comprenant une pluralité de sous-mémoires pour chacun parmi la pluralité d'utilisateurs afin de stocker les données redirigées des utilisateurs.

3. Procédé selon revendication 2, comprenant en outre les étapes consistant à :
fournir un réseau basé sur le protocole Internet (IP) en tant que réseau sans fil à commutation de paquets (145) ; et
fournir une adresse IP, en tant qu'informations d'adressage, intégrée dans les données redirigées.

4. Procédé selon la revendication 2, comprenant en outre l'étape consistant à :
fournir une adresse e-mail, en tant qu'informations d'adressage, intégrée dans les données redirigées.

5. Procédé selon la revendication 3, comprenant en outre l'étape consistant à :
fournir le réseau de service général de radiocommunication par paquet (GPRS) en tant que réseau IP.

6. Procédé selon la revendication 1, dans lequel l'étape déterminante comprend en outre les étapes consistant à :
recevoir une adresse de réseau valide pour le dispositif mobile (100) au niveau du serveur de stockage et retransmission (140) ;
paramétrer un minuteur d'inactivité pour le dispositif mobile (100) lorsque l'adresse de réseau valide est reçue au niveau du serveur de stockage et retransmission (140) ;
paramétrer un indicateur signalant que l'adresse de réseau est invalide si le minuteur d'inactivité a expiré.

7. Procédé selon la revendication 1, dans lequel l'étape déterminante comprend en outre les étapes consistant à :
contacter par le serveur de stockage et retransmission (140) un composant d'attribution d'adresse (135) du réseau sans fil à commutation de paquets (145) ;
recevoir des informations provenant du composant d'attribution d'adresse (335) indiquant si l'adresse de réseau sans fil pour le dispositif mobile (100) est valide.

8. Procédé selon la revendication 7, comprenant en outre l'étape consistant à :
fournir un serveur DHCP en tant que composant d'attribution d'adresse (335) du réseau sans fil à commutation de paquets (145).

9. Procédé selon la revendication 7, comprenant en outre l'étape consistant à :
intégrer le composant d'attribution d'adresse dans le serveur de stockage et retransmission (140).

10. Procédé selon la revendication 1, dans lequel l'étape déterminante comprend en outre les étapes consistant à :
fournir un composant d'attribution d'adresse au niveau du serveur de stockage et retransmission (140) ;
recevoir des informations d'adressage réseau au niveau du composant d'attribution d'adresse (335), et associer ces informations d'adressage à un dispositif mobile (100) ; et
fournir ces informations d'adressage au serveur de stockage et
retransmission (140) via le composant d'attribution d'adresse (335).

11. Procédé selon la revendication 1, comprenant en outre l'étape consistant à :
fournir des informations dans la commande de demande de connexion indiquant si le serveur de stockage et retransmission (140) comprend un composant d'attribution d'adresse (335).

12. Procédé selon la revendication 11, comprenant en outre l'étape consistant à ce que :
le dispositif mobile (100) transmette l'adresse de réseau valide au serveur de stockage et retransmission (140) si le serveur de stockage et
retransmission (140) ne comprend pas de composant d'attribution d'adresse (335).

13. Procédé selon la revendication 11, comprenant en outre l'étape consistant à ce que :
le composant d'attribution d'adresse (335) détecte l'adresse de réseau valide obtenue à partir du réseau sans fil à commutation de paquets (145) et fournisse l'adresse de réseau valide au serveur de stockage et
retransmission (140) si le serveur de stockage et retransmission (140) ne comprend pas de composant d'attribution d'adresse (335).

14. Procédé selon la revendication 1, comprenant en outre l'étape consistant à :
fournir une commande PING en tant que commande de demande de connexion.

15. Procédé selon la revendication 1, comprenant en outre les étapes consistant à :
configurer le dispositif mobile (100) pour transmettre périodiquement une demande d'adresse au réseau sans fil à commutation de paquets (145) afin d'obtenir une adresse de réseau sans fil valide ; et
fournir l'adresse de réseau sans fil valide au serveur de stockage et
retransmission (140).

16. Procédé selon la revendication 1, comprenant en outre l'étape consistant à :
fournir une base de données de mappage d'adresse au niveau du serveur de stockage et retransmission (140), la base de données de mappage d'adresse associant une pluralité d'adresses réseau sans fil à une pluralité de dispositifs mobiles (100).

17. Procédé selon la revendication 1, dans lequel la commande de demande de connexion est transmise via un canal de données du réseau téléphonique sans fil (150).

18. Procédé selon la revendication 17, dans lequel le canal de données est un canal SMS.

19. Procédé selon la revendication 1, comprenant en outre l'étape consistant à :
fournir le réseau GSM en tant que réseau téléphonique sans fil (150) et le réseau GPRS en tant que réseau sans fil à commutation de paquets (145).

20. Procédé selon la revendication 1, comprenant en outre les étapes consistant à :
déterminer si le dispositif mobile (100) est connecté au serveur de messagerie (120) ; et
si le dispositif mobile (100) est connecté au serveur de messagerie (120), désactiver alors la redirection des données reçues vers le réseau sans fil à commutation de paquets (145) jusqu'à ce que le dispositif mobile (100) ne soit plus connecté au serveur de messagerie (120).

21. Procédé selon la revendication 20, comprenant en outre l'étape consistant à :
fournir une station d'accueil (110) pour connecter directement (100) au serveur de messagerie (120).

22. Procédé selon la revendication 21, comprenant en outre l'étape consistant à :
coupler le dispositif mobile (100) à la station d'accueil (110) via une liaison RF à courte portée.

23. Procédé selon la revendication 1, comprenant en outre l'étape consistant à :
fournir un système de bureau en tant que serveur de messagerie (120), le système de bureau étant associé à un utilisateur du dispositif mobile (100).

24. Procédé selon la revendication 1, comprenant en outre l'étape consistant à :
fournir un serveur réseau en tant que serveur de messagerie (120), le serveur réseau étant associé à une pluralité d'utilisateurs faisant fonctionner une pluralité de dispositifs mobiles (100).

25. Procédé selon la revendication 1, dans lequel les données redirigées comprennent des messages électroniques.

26. Procédé selon la revendication 1, dans lequel les données redirigées comprennent des messages vocaux numérisés.

27. Procédé selon la revendication 1, dans lequel les données redirigées comprennent des messages électroniques et des messages vocaux numérisés.

28. Système pour transmettre des données à un dispositif mobile (100), comprenant :
un serveur de messagerie (120) ayant une application de redirection (12) pour recevoir des données provenant d'une pluralité de sources et pour rediriger les données reçues vers un réseau externe ;
un réseau sans fil à commutation de paquets (145) couplée au réseau externe, le réseau sans fil à commutation de paquets (145) ayant un serveur de stockage et retransmission (140) pour recevoir les données redirigées provenant du serveur de messagerie et pour transmettre les données redirigées vers le dispositif mobile (100) ; et
un réseau téléphonique sans fil (150) fonctionnant en association avec le réseau sans fil à commutation de paquets (145), le dispositif mobile (100) étant capable de communiquer à la fois sur le réseau sans fil à commutation de paquets (145) et à la fois sur le réseau téléphonique sans fil(150);
dans lequel le serveur de stockage et retransmission (140) détermine si le dispositif mobile (100) est associé à une adresse de réseau valide, et si n'est pas le cas, alors le serveur de stockage et retransmission (140) transmet une commande de demande de connexion au dispositif mobile (100) via le réseau téléphonique sans fil (150) le chargeant d'obtenir une adresse de réseau valide à partir du réseau sans fil à commutation de paquets (145), après quoi l'adresse de réseau valide est fournie au serveur de stockage et retransmission (140) et le serveur de stockage et retransmission (140) adresse les données redirigées en utilisant l'adresse de réseau sans fil valide pour une transmission au dispositif mobile (100) via le réseau sans fil à commutation de paquets (145).

29. Système selon la revendication 28, dans lequel le réseau sans fil à commutation de paquets (145) est un réseau basé sur le protocole Internet (IP).

30. Système selon la revendication 29, dans lequel le réseau IP est le réseau GPRS.

31. Système selon la revendication 30, dans lequel le réseau téléphonique sans fil (150) est le réseau GSM.

32. Système selon la revendication 28, comprenant en outre : un réseau local (LAN) couplant le serveur de messagerie (120) à la pluralité de sources.

33. Système selon la revendication 32, dans lequel le serveur de messagerie (120) est un système informatique de bureau associé à l'utilisateur du dispositif mobile (100).

34. Système selon la revendication 32, dans lequel le serveur de messagerie (120) est un serveur réseau associé à une pluralité d'utilisateurs faisant fonctionner une pluralité de dispositifs mobiles (100).

35. Système selon la revendication 28, comprenant en outre : un système de pare-feu (160) couplé entre le serveur de messagerie (120) et le réseau externe.

36. Système selon la revendication 28, dans lequel le réseau externe est l'Internet.

37. Système selon la revendication 28, comprenant en outre : une station d'accueil (110) pour coupler le dispositif mobile au serveur de messagerie (120).

38. Système selon la revendication 37, dans lequel le dispositif mobile (100) établit une connexion électrique directe avec la station d'accueil (110).

39. Système selon la revendication 37, dans lequel le dispositif mobile (100) établit une connexion sans fil avec la station d'accueil (110).

40. Système selon la revendication 37, dans lequel le serveur de messagerie (120) détecte si le dispositif mobile (100) est couplé à la station d'accueil (110), et si c'est le cas, le serveur de messagerie (120) désactive la redirection des données.

41. Système selon la revendication 28, dans lequel le réseau téléphonique sans fil parallèle (150) comprend un canal de données SMS pour transmettre la commande de demande de connexion au dispositif mobile (100).

42. Système selon la revendication 28, dans lequel la commande de demande de connexion est une demande PING.

43. Système selon la revendication 28, dans lequel la commande de demande de connexion comprend des informations indiquant si le serveur de stockage et retransmission (140) comprend un composant d'attribution d'adresse (335).

44. Système selon la revendication 28, dans lequel le serveur de messagerie (120) est un serveur Microsoft Exchange.

45. Système selon la revendication 28, dans lequel le serveur de stockage et retransmission (140) comprend un composant d'attribution d'adresse (335) intégré.

46. Système selon la revendication 45, dans lequel le composant d'attribution d'adresse (335) intégré est un serveur DHCP.

47. Système selon la revendication 28, comprenant en outre :
un composant d'attribution d'adresse (335) associé au réseau sans fil à commutation de paquets (145) et couplé au serveur de stockage et retransmission (140).

48. Système selon la revendication 28, dans lequel le réseau sans fil à commutation de paquets (145) comprend :
un ou plusieurs points d'entrée de réseau (305), le serveur de stockage et retransmission (140) étant couplé à au moins un des un ou plusieurs points d'entrée de réseau (305) ;
une pluralité de routeurs réseau (315) ; et
un serveur de noms (310).

49. Système selon la revendication 28, dans lequel le réseau sans fil à commutation de paquets (145) crée un tunnel de réseau sans fil (325) à travers les un ou plusieurs points d'entrée de réseau (305) et la pluralité de routeurs réseau (315) afin de transmettre des données au dispositif mobile (100).

50. Système selon la revendication 49, dans lequel le tunnel de réseau sans fil (325) transporte des paquets de données TCP.

51. Système selon la revendication 49, dans lequel le tunnel de réseau sans fil (325) transporte des paquets de données UDP.

52. Système selon la revendication 49, dans lequel le dispositif mobile (100) est configuré pour transmettre une demande d'adresse au réseau sans fil à commutation de paquets (145) lors de la réception de la commande de demande de connexion provenant du serveur de stockage et retransmission (140).

53. Système selon la revendication 52, dans lequel le réseau sans fil à commutation de paquets (145) attribue de manière dynamique une adresse de réseau valide au dispositif mobile (100) en réponse à la demande d'adresse.

54. Système selon la revendication 53, dans lequel l'adresse de réseau valide est fournie au serveur de stockage et retransmission (140).

55. Système selon la revendication 54, dans lequel le dispositif mobile (100) transmet l'adresse de réseau valide directement au serveur de stockage et retransmission (140).

56. Système selon la revendication 54, dans lequel l'adresse de réseau valide est fournie au serveur de stockage et retransmission (140) par un composant d'attribution d'adresse couplé au réseau sans fil à commutation de paquets (145) et intégré dans le serveur de stockage et retransmission (140).

57. Système selon la revendication 28, comprenant en outre : une base de données de mappage d'adresse pour stocker une table de dispositifs mobiles (105) et des adresses réseau associées.

58. Système selon la revendication 28, dans lequel le dispositif mobile (100) est un ordinateur de radiomessagerie bidirectionnelle.

59. Système selon la revendication 28, dans lequel le dispositif mobile (100) est un téléphone cellulaire ayant des capacités de messagerie de données.

60. Système selon la revendication 28, dans lequel le dispositif mobile (100) est un assistant numérique portable.

61. Système selon la revendication 28, dans lequel les données comprennent des messages électroniques.

62. Système selon la revendication 37, dans lequel le dispositif mobile (100) est configuré pour communiquer des informations de cryptage/décryptage au serveur de messagerie (120) lorsque le dispositif mobile (100) est couplé à la station d'accueil (110).

63. Système selon la revendication 28, comprenant en outre :
un système d'alarme électronique en communication avec le serveur de messagerie (120), le système d'alarme électronique détectant un état d'alarme et transmettant des données au serveur de messagerie (120) devant être redirigées vers le dispositif mobile (100).

64. Système selon la revendication 28, comprenant en outre : un système de surveillance personnel en communication avec le serveur de messagerie (120), le système de surveillance personnel surveillant au moins un signe vital d'un être humain et transmettant des données de signe vital au serveur de messagerie (120) devant être redirigées vers le dispositif mobile (100).

65. Système selon la revendication 28, comprenant en outre : au moins une parmi la pluralité de sources sélectionnées dans le groupe constitué de :
un détecteur de mouvement, un site Web, une mémoire de messages électroniques, un échange d'informations PBX, ou une base de données d'informations.

66. Système selon la revendication 28, dans lequel les données reçues sont sélectionnées dans le groupe constitué de messages vocaux numérisés, de messages électroniques, de messages instantanés, de comptes de stocks d'entreprise, de registres des ventes d'entreprise, d'informations d'alarme, d'informations de signe vital, ou d'information de surveillance d'équipement.
